# EUROPEAN PATENT APPLICATION

(11) **EP 4 742 210 A1**
(43) Date of publication of application: **13.05.2026**
(21) Application number: 24902308.6
(22) Date of filing: 29.09.2024
(51) Int. Cl.: G08G 1/01, H04M 1/72421, H04W 4/40, H04W 4/90

(54) **VEHICLE ACCIDENT DETECTION METHOD, APPARATUS AND SYSTEM, AND TERMINAL DEVICE AND VEHICLE-MOUNTED DEVICE**

(30) Priority: 12.12.2023 CN 202311710135
(71) Applicant: Huawei Technologies Co., Ltd., Shenzhen, Guangdong 518129 (CN)
(72) Inventor: LI, Xiaohui, Shenzhen, Guangdong 518129 (CN); XIE, Yu, Shenzhen, Guangdong 518129 (CN); HAN, Ping, Shenzhen, Guangdong 518129 (CN); SUN, Shuai, Shenzhen, Guangdong 518129 (CN)
(74) Representative: MERH-IP Matias Erny Reichl Hoffmann Patentanwälte PartG mbB
(86) International application number: PCT/CN2024/122552
(87) International publication number: WO 2025/123882

(57) **Abstract**

This application provides a car crash detection method, apparatus, and system, a terminal device, and a vehicle-mounted device. The vehicle-mounted device and the terminal device that are in a same vehicle perform double detection on whether traveling is abnormal, to fully consider detection results of the vehicle-mounted device and the terminal device for a traveling abnormality, and combine vehicle status detection by the vehicle-mounted device with car crash detection and emergency rescue calling capabilities of the terminal device, thereby improving car crash detection accuracy, and avoiding false alarms in special cases such as skiing and roller coaster riding.

## Description

This application claims priority to Chinese Patent Application No. 2023117101352, filed with the China National Intellectual Property Administration on December 12, 2023 and entitled "CAR CRASH DETECTION METHOD, APPARATUS, AND SYSTEM, TERMINAL DEVICE, AND VEHICLE-MOUNTED DEVICE", which is incorporated herein by reference in its entirety.

### TECHNICAL FIELD

This application relates to the field of safe traveling technologies, and in particular, to a car crash detection method, apparatus, and system, a terminal device, and a vehicle-mounted device.

### BACKGROUND

Vehicle accidents are one of the leading causes of death worldwide, and a survival rate depends to a large extent on an arrival speed of rescue personnel after an accident happens. With development of terminal technologies, usage of mobile terminals is increasingly high, and currently, some terminal devices provide a car crash detection function. After detecting a severe car crash, the terminal device automatically makes a call for emergency help and calls an emergency contact of a user, thereby seeking help quickly. However, the current car crash detection function of the terminal device generally identifies and detects a car crash based on a sensor on the terminal device. A limitation of performance of the sensor limits a capability of the device to identify and detect a car crash, and a car crash that happens may not be detected. In addition, when the user carries the terminal device while participating in an activity like skiing or riding a roller coaster, the terminal device may give a false car crash alarm, that is, a state of the user in a special scenario is identified as a car crash.

Therefore, how to improve accuracy of car crash detection while ensuring a timely call for rescue becomes an urgent technical problem to be resolved.

### SUMMARY

This application provides a car crash detection method, apparatus, and system, a terminal device, and a vehicle-mounted device, to implement car crash detection through interaction between the terminal device and the vehicle-mounted device. When it is determined that a car crash is detected, the terminal device makes a call for emergency rescue, to improve accuracy of car crash detection while ensuring a timely call, thereby reducing or even avoiding false alarms of car crash detection.

According to a first aspect, a car crash detection method is provided. The method is applied to a terminal device. The method includes: detecting first traveling data of a vehicle; receiving first abnormality prompt information sent by a vehicle-mounted device; and determining, based on the first traveling data and the first abnormality prompt information, whether to make a call for emergency rescue, where the vehicle-mounted device and the terminal device are in the vehicle, and there is a communication connection between the vehicle-mounted device and the terminal device.

In the car crash detection method according to the first aspect, when whether to make a call for emergency rescue is being determined, information from both the terminal device and the vehicle-mounted device that are in the same vehicle needs to be considered, that is, during car crash detection, traveling abnormality detection by the vehicle-mounted device and the terminal device is fully considered. Therefore, vehicle status detection by the vehicle-mounted device may be combined with car crash detection and emergency rescue calling capabilities of the terminal device, thereby improving car crash detection accuracy. In addition, when a user carries the terminal device while participating in an activity like skiing or riding a roller coaster, because the prerequisite condition that the terminal device and the vehicle-mounted device are in the same vehicle is not met, the terminal device does not make a call for emergency rescue during skiing and roller coaster riding. Therefore, the car crash detection method according to the first aspect can further avoid false car crash alarms in special cases such as skiing and roller coaster riding.

In a possible implementation of the first aspect, the first abnormality prompt information includes indication information, the indication information indicates that the vehicle has a traveling abnormality, and determining, based on the first traveling data and the first abnormality prompt information, whether to make a call for emergency rescue includes: determining, based on the indication information and the first traveling data, whether the vehicle actually has a traveling abnormality; and determining, based on whether the vehicle actually has a traveling abnormality, whether to make a call for emergency rescue. In this implementation, after receiving the indication information sent by the vehicle-mounted device to indicate that the vehicle has a traveling abnormality, second detection is performed based on the indication information and the first traveling data, to determine whether there is actually a traveling abnormality, and then determine, based on whether there is actually a traveling abnormality, whether to make a call for emergency rescue. The car crash detection accuracy is improved through second car crash detection by the vehicle-mounted device in the same vehicle.

For example, the terminal device may include a handheld device (for example, a smartphone), various portable notebook computers, various tablet computers, a smart camera, a wearable device, and the like.

In a possible implementation of the first aspect, determining, based on whether the vehicle actually has a traveling abnormality, whether to make a call for emergency rescue includes: when the vehicle actually has a traveling abnormality, determining to make a call for emergency rescue, where the call for emergency rescue includes: displaying call for rescue prompt information and sending, to the vehicle-mounted device, prompt information of needing to make a call for rescue. In this implementation, the two manners of making a call for emergency rescue, that is, displaying the call for rescue prompt information and sending, to the vehicle-mounted device, the prompt information of needing to make a call for rescue, may be performed simultaneously, thereby improving efficiency of making a call for emergency rescue. The terminal device displays the call for rescue prompt information, to prompt the user of the terminal device that a car crash happens, so that the user can learn car crash information in time, thereby improving user experience. Sending, to the vehicle-mounted device, the prompt information of needing to make a call for rescue gives a response to the vehicle-mounted device, so that the vehicle-mounted device can also make a call for emergency rescue in time.

For example, after displaying the call for rescue prompt information, the car crash detection method further includes: determining, based on a response status of the user on the call for rescue prompt information, whether to make a call for emergency rescue. In this implementation, the terminal device interacts with the user when determining whether to make a call for emergency rescue, and determines, based on the response status of the user, whether to make a call for emergency rescue, so that the user can learn an abnormality in time, and the user has a right to determine whether to make an emergency call, thereby improving user experience.

For example, determining, based on the response status of the user on the call for rescue prompt information, whether to make a call for emergency rescue may include: if response information of the user that confirms to make a call is received, or no response information of the user is received within a preset time length, making a call for emergency rescue; or if response information of the user that confirms not to make a call is received, not making a call for emergency rescue, that is, ignoring the traveling abnormality prompt information sent by the vehicle-mounted device. In this implementation, when the user does not respond, the user may be in a state in which the user cannot respond. Therefore, it is considered that an emergency call needs to be made. In this case, the terminal device automatically makes a call for emergency rescue, to ensure that a call for emergency rescue can also be made in a special case.

For example, determining, based on whether the vehicle actually has a traveling abnormality, whether to make a call for emergency rescue includes: when the vehicle does not actually have a traveling abnormality, determining not to make a call for emergency rescue.

For example, not making a call for emergency rescue may include: not displaying call for rescue prompt information and sending, to the vehicle-mounted device, prompt information of not needing to make a call for rescue.

In a possible implementation of the first aspect, determining that the vehicle actually has a traveling abnormality includes: determining that the vehicle has a traveling abnormality, and that a severity of the traveling abnormality is greater than or equal to a preset abnormality threshold. In this implementation, only when the severity of the traveling abnormality is greater than or equal to the preset abnormality threshold, it is determined that there is actually a traveling abnormality, so that only when the traveling abnormality reaches a specific severity, it is determined that there is actually a traveling abnormality, thereby reducing excessive processing on a minor abnormality and improving user experience.

For example, if it is determined that the vehicle actually has a traveling abnormality and a severity of the traveling abnormality is less than the preset abnormality threshold, it may be considered that it is determined that there is actually no traveling abnormality. In this implementation, a minor traveling abnormality is considered as that there is actually no traveling abnormality, thereby reducing emergency calls made by the terminal device due to a minor abnormalities, and improving user experience.

In a possible implementation of the first aspect, determining, based on the first traveling data and the first abnormality prompt information, whether to make a call for emergency rescue includes: determining, based on the first traveling data, that the vehicle has a traveling abnormality; sending indication information to the vehicle-mounted device, where the indication information indicates that the vehicle has a traveling abnormality; and determining, based on a response status of the vehicle-mounted device to the indication information, whether to make a call for emergency rescue, where the first abnormality prompt information includes the response status of the vehicle-mounted device to the indication information. In this implementation, when traveling abnormality indication information of the vehicle-mounted device is not received, the terminal device detects a traveling abnormality based on the detected first traveling data, sends the indication information to the vehicle-mounted device, and determines, based on a response of the vehicle-mounted device to the indication information, whether to make a call for emergency rescue, that is, without receiving the indication information sent by the vehicle-mounted device, the terminal device can still implement double car crash detection through interaction between the vehicle-mounted device and the terminal device, thereby improving the car crash detection accuracy.

In a possible implementation of the first aspect, determining, based on the response status of the vehicle-mounted device to the indication information, whether to make a call for emergency rescue includes: if prompt information that is sent by the vehicle-mounted device in response to the indication information and that confirms that an abnormality happens is received, or if no response information of the vehicle-mounted device to the indication information is received within a preset time length, determining to make a call for emergency rescue; or if prompt information that is sent by the vehicle-mounted device in response to the indication information and that confirms that no abnormality happens is received, determining not to make a call for emergency rescue. In this implementation, the terminal device may generate a determining result in different response manners of the vehicle-mounted device: determining to make a call for rescue or determining not to make a call for rescue. The method is simple and easy to implement.

In a possible implementation of the first aspect, before determining whether to make a call for emergency rescue, the method further includes: determining, through message broadcasting communication, that the terminal device and the vehicle-mounted device are in the vehicle. In this implementation, it is determined, in the broadcasting manner, that the terminal device and the vehicle-mounted device are co-riding devices, so that all available terminal devices that are in the same vehicle as the vehicle-mounted device can communicate with the vehicle-mounted device, thereby improving an application scope of the car crash detection method, and ensuring that as many passenger users in the vehicle as possible can make a call for emergency rescue, to obtain emergency rescue.

In a possible implementation of the first aspect, determining, through message broadcasting communication, that the terminal device and the vehicle-mounted device are in the vehicle includes: receiving first prompt information and a first identifier that are broadcast by the vehicle-mounted device, where the first prompt information prompts that the vehicle enters a traveling state, the first prompt information includes second traveling data of the vehicle that is obtained by the vehicle-mounted device, and the first identifier is an identifier of the vehicle-mounted device; in response to the first prompt information, determining, based on third traveling data of the vehicle that is detected by the terminal device, whether the terminal device is in a riding state; if it is determined that the terminal device is in the riding state, determining, based on the second traveling data of the vehicle and the third traveling data of the vehicle, whether the terminal device is in the vehicle; and if it is determined that the terminal device is in the vehicle, broadcasting a co-riding identifier and a second identifier, where the co-riding identifier represents that the vehicle-mounted device corresponding to the first identifier and the terminal device corresponding to the second identifier are in the same vehicle, and the second identifier is an identifier of the terminal device. In this implementation, the terminal device determines whether the terminal device and the vehicle-mounted device that are in the vehicle are co-riding. The first prompt information includes the second traveling data of the vehicle. After the terminal device determines that the terminal device is in the riding state, it may be directly determined, based on the second traveling data of the vehicle and the third traveling data of the vehicle, whether the terminal device and the vehicle-mounted device are co-riding according to a short method procedure. In addition, the first identifier of the terminal device is used to identify the terminal device, and the second identifier is used to identify the vehicle-mounted device, so that the vehicle-mounted device and the terminal device interact without obtaining privacy information such as a mobile phone number of the terminal device, thereby ensuring privacy security of the terminal device.

In a possible implementation of the first aspect, determining, through message broadcasting communication, that the terminal device and the vehicle-mounted device are in the vehicle includes: receiving first prompt information and a first identifier that are broadcast by the vehicle-mounted device, where the first prompt information prompts that the vehicle enters a traveling state, and the first identifier is an identifier of the vehicle-mounted device; in response to the first prompt information, determining, based on third traveling data of the vehicle that is detected by the terminal device, whether the terminal device is in a riding state; if it is determined that the terminal device is in the riding state, broadcasting the third traveling data and a second identifier of the vehicle, where the second identifier is an identifier of the terminal device; and if a co-riding identifier broadcast by the vehicle-mounted device is received, determining that the terminal device is in the vehicle, where the co-riding identifier represents that the vehicle-mounted device corresponding to the first identifier and the terminal device corresponding to the second identifier are in the same vehicle. In this implementation, the vehicle-mounted device determines whether the terminal device and the vehicle-mounted device are co-riding, to fully use computing resources of the vehicle-mounted device, and reduce occupancy of computing resources of the terminal device.

For example, the second traveling data of the vehicle may include a plurality of groups of traveling data of the vehicle obtained by the vehicle-mounted device, and each group of traveling data corresponds to one moment. The third traveling data of the vehicle may include a plurality of groups of traveling data of the vehicle fed back by the terminal device, and each group of traveling data corresponds to one moment. A plurality of comparison results are obtained by comparing two groups of traveling data at each moment, and whether the terminal device and the vehicle-mounted device are co-riding is determined based on the plurality of comparison results. Comparing the plurality of groups of traveling data can improve reliability of a determining result, and prevent the terminal device and the vehicle-mounted device that are not co-riding from being falsely detected as co-riding because traveling data at merely a specific moment matches.

For example, the second traveling data of the vehicle and the third traveling data of the vehicle may separately include at least one of a vehicle speed, geographical location information, and/or a change of geographical location information in a short time.

For example, a co-riding determining process may include at least one of the following: matching of vehicle speeds, matching of geographical locations, and matching of change information of geographical location information in the short time.

According to a second aspect, a car crash detection method is provided. The method is applied to a vehicle-mounted device. The method includes: detecting whether a traveling abnormality happens to a vehicle in which the vehicle-mounted device is located, to obtain a detection result; receiving second abnormality prompt information sent by a terminal device; and determining, based on the detection result and the second abnormality prompt information, whether to make a call for emergency rescue, where the vehicle-mounted device and the terminal device are in the vehicle, and there is a communication connection between the vehicle-mounted device and the terminal device.

In the car crash detection method according to the second aspect, when whether to make a call for emergency rescue is being determined, information from both the terminal device and the vehicle-mounted device that are in the same vehicle needs to be considered, that is, a detection result of the vehicle-mounted device on whether a traveling abnormality happens and the second abnormality prompt information sent by the terminal device are considered, thereby improving accuracy of a call for emergency rescue. In addition, before car crash detection is performed, it is first ensured that both the terminal device and the vehicle-mounted device are in the vehicle, thereby avoiding false alarms in special cases.

In a possible implementation of the second aspect, determining, based on the detection result and the second abnormality prompt information, whether to make a call for emergency rescue includes: if the detection result is that a traveling abnormality happens to the vehicle, sending indication information to the terminal device based on the traveling abnormality that happens to the vehicle, where the indication information indicates that the vehicle has a traveling abnormality; and determining, based on a response status of the terminal device to the indication information, whether to make a call for emergency rescue, where the second abnormality prompt information includes the response status of the terminal device to the indication information. In this implementation, after determining that the vehicle has a traveling abnormality, the vehicle-mounted device sends the indication information to the terminal device, and determines, based on the response status of the terminal device to the indication information, whether to make a call for emergency rescue. Double detection by the vehicle-mounted device and the terminal device can improve car crash detection accuracy.

In a possible implementation of the second aspect, determining, based on the response status of the terminal device to the indication information, whether to make a call for emergency rescue includes: if information that is sent by the terminal device in response to the indication prompt information of needing to make a call for rescue is received, determining to make a call for emergency rescue. In this implementation, when the prompt information of needing to make a call for rescue that is sent by the terminal device is received, it is determined to make a call for emergency rescue, so that the call for emergency rescue of the vehicle-mounted device is consistent with that of the terminal device, thereby ensuring consistency and accuracy of the call for emergency rescue.

For example, determining, based on the response status of the terminal device to the indication information, whether to make a call for emergency rescue includes: if no response of the terminal device is received within a preset time length, determining to make a call for emergency rescue. In this implementation, no response of the terminal device within a long time may be that the terminal device is abnormal (for example, the terminal device is damaged or is thrown out of a vehicle) due to a traveling abnormality. In this case, it is determined to make a call for emergency rescue, thereby ensuring a response to an abnormality of the terminal device according to the car crash detection method.

For another example, determining, based on the response status of the terminal device to the indication information, whether to make a call for emergency rescue includes: if information that is sent by the terminal device in response to the indication prompt information of not needing to make a call for rescue is received, determining not to make a call for emergency rescue, that is, ignoring the detected abnormality information. In this implementation, the terminal device sends the prompt information of not needing to make a call for rescue, that is, a user of the terminal device determines that no traveling abnormality actually happens. Therefore, the vehicle-mounted device does not make a call for emergency rescue, thereby ensuring consistency between the terminal device and the vehicle-mounted device on response to a car crash detection result in terms of a call for rescue, and improving accuracy and necessity of a call for emergency rescue by considering a response of the user. When the user considers an abnormality that happens as a minor accident or an accident that no call for rescue needs to be made, the user may actively choose not to make a call for emergency rescue, thereby reducing a probability of making a call for rescue in a minor accident.

In a possible implementation of the second aspect, the second abnormality prompt information includes indication information, the indication information indicates that the vehicle has a traveling abnormality, and detecting whether a traveling abnormality happens to the vehicle in which the vehicle-mounted device is located, to obtain the detection result includes: detecting, in response to the indication information, whether a traveling abnormality happens to the vehicle in which the vehicle-mounted device is located, to obtain the detection result; and determining, based on the detection result and the second abnormality prompt information, whether to make a call for emergency rescue includes: determining, based on the detection result, whether the vehicle actually has a traveling abnormality; and determining, based on whether the vehicle actually has a traveling abnormality, whether to make a call for emergency rescue, and determining response information sent to the terminal device for the indication information, where the response information includes: prompt information confirming that an abnormality happens or prompt information confirming that no abnormality happens.

In this implementation, after receiving the indication information that is sent by the terminal device for indicating that there is a traveling abnormality, the vehicle-mounted device performs second traveling abnormality detection on the vehicle to obtain the detection result, to determine, based on the detection result, whether there is actually a traveling abnormality, determine whether to make a call for emergency rescue, and determine to send the response information to the terminal device. The second detection performed by the vehicle-mounted device can improve the car crash detection accuracy.

In a possible implementation of the second aspect, making a call for emergency rescue includes: calling for road rescue and/or calling police. In this implementation, the call for emergency rescue of the vehicle-mounted device includes calling for road rescue or calling police, or both calling for road rescue and calling police. Both calling for road rescue and calling police belong to use of public rescue measures. Rescue response to all persons in the vehicle can be implemented by making these calls for rescue via the vehicle-mounted device.

For example, if the vehicle-mounted device stores another emergency contact manner, the call for emergency rescue may also include a call in the another emergency contact manner. This is not limited in this application.

In a possible implementation of the second aspect, before determining whether to make a call for emergency rescue, the method further includes: determining, through message broadcasting communication, that the terminal device and the vehicle-mounted device are in the vehicle. In this implementation, it is determined, in the broadcasting manner, that the terminal device and the vehicle-mounted device are co-riding devices, and the terminal device can communicate with the vehicle-mounted device without logging in to a specific account, so that all available terminal devices that are in the same vehicle as the vehicle-mounted device can communicate with the vehicle-mounted device, thereby improving an application scope of the car crash detection method, and ensuring that as many passenger users in the vehicle as possible can make a call for emergency rescue, to obtain emergency rescue as much as possible.

In a possible implementation of the second aspect, determining, through message broadcasting communication, that the terminal device and the vehicle-mounted device are in the vehicle includes: determining, based on the second traveling data of the vehicle obtained by the vehicle-mounted device, that the vehicle enters a traveling state; broadcasting first prompt information and a first identifier, where the first prompt information prompts that the vehicle enters the traveling state, the first prompt information includes the second traveling data of the vehicle, and the first identifier is an identifier of the vehicle-mounted device; and if a co-riding identifier and a second identifier that are broadcast by the terminal device in response to the first prompt information is received, it is determined, based on the co-riding identifier, that the vehicle-mounted device corresponding to the first identifier and the terminal device corresponding to the second identifier are in a same vehicle, where the second identifier is an identifier of the terminal device. In this implementation, the terminal device determines whether the terminal device and the vehicle-mounted device that are in the vehicle are co-riding. The first prompt information includes the second traveling data of the vehicle. After the terminal device determines that the terminal device is in the riding state, it may be directly determined, based on the second traveling data of the vehicle and the third traveling data of the vehicle, whether the terminal device and the vehicle-mounted device are co-riding according to a short method procedure. In addition, the first identifier of the terminal device is used to identify the terminal device, and the second identifier is used to identify the vehicle-mounted device, so that the vehicle-mounted device and the terminal device interact without privacy information such as a mobile phone number of the terminal device, thereby ensuring privacy security of the terminal device.

In a possible implementation of the second aspect, determining, through message broadcasting communication, that the terminal device and the vehicle-mounted device are in the vehicle includes: determining, based on the second traveling data of the vehicle obtained by the vehicle-mounted device, that the vehicle enters a traveling state; broadcasting first prompt information and a first identifier, where the first prompt information prompts that the vehicle enters the traveling state, and the first identifier is an identifier of the vehicle-mounted device; receiving third traveling data and a second identifier of the vehicle that are broadcast by the terminal device in response to the first prompt information, where the third traveling data of the vehicle is detected by the terminal device, and the second identifier is an identifier of the terminal device; determining, based on the second traveling data of the vehicle and the third traveling data of the vehicle, whether the vehicle-mounted device and the terminal device are in the vehicle; if it is determined that the vehicle-mounted device and the terminal device are in the vehicle, broadcasting a co-riding identifier, where the co-riding identifier represents that the vehicle-mounted device corresponding to the first identifier and the terminal device corresponding to the second identifier are in the same vehicle. In this implementation, the vehicle-mounted device determines whether the terminal device and the vehicle-mounted device are co-riding, to fully use computing resources of the vehicle-mounted device, and reduce occupancy of computing resources of the terminal device.

According to a third aspect, a car crash detection apparatus is provided. The communication apparatus includes units configured to perform steps of the method according to any one of the foregoing aspects or the possible implementations of the foregoing aspects.

According to a fourth aspect, a communication apparatus is provided. The communication apparatus includes units configured to perform steps of the method according to any one of the foregoing aspects or the possible implementations of the foregoing aspects.

According to a fifth aspect, a communication apparatus is provided. The communication apparatus includes at least one processor and a memory. The processor is coupled to the memory, the memory stores program instructions, and when the program instructions stored in the memory are executed by the processor, the method according to any one of the foregoing aspects or the possible implementations of the foregoing aspects is performed.

According to a sixth aspect, a communication apparatus is provided. The communication apparatus includes at least one processor and an interface circuit. The at least one processor is configured to perform the method according to any one of the foregoing aspects or the possible implementations of the foregoing aspects.

According to a seventh aspect, a terminal device is provided. The terminal device includes a processor and a memory, the memory is configured to store instructions, and the processor is configured to read the instructions to perform the method according to any one of the first aspect or the possible implementations of the first aspect.

According to an eighth aspect, a vehicle-mounted device is provided. The vehicle-mounted device includes a processor and a memory, the memory is configured to store instructions, and the processor is configured to read the instructions to perform the method according to any one of the second aspect or the possible implementations of the second aspect, or the processor is configured to read the instructions to perform the method according to any one of the fourth aspect or the possible implementations of the fourth aspect.

According to a ninth aspect, a car crash detection system is provided. The system includes the terminal device according to any one of the seventh aspect or the possible implementations of the seventh aspect and the vehicle-mounted device according to any one of the eighth aspect or the possible implementations of the eighth aspect.

According to a tenth aspect, a computer program product is provided. The computer program product includes a computer program. When the computer program is executed by a processor, the method according to any one of the foregoing aspects or the possible implementations of the foregoing aspects is performed.

According to an eleventh aspect, a computer-readable storage medium is provided. The computer-readable storage medium stores a computer program. When the computer program is executed, the method according to any one of the foregoing aspects or the possible implementations of the foregoing aspects is performed.

According to a twelfth aspect, a chip is provided. The chip includes a processor, configured to: invoke a computer program from a memory and run the computer program, to enable a terminal device on which the chip is installed to perform the method according to any one of the foregoing aspects or the possible implementations of the foregoing aspects.

### BRIEF DESCRIPTION OF DRAWINGS

FIG. 1 is a diagram of an example of a structure of a car crash detection system according to an embodiment of this application;
FIG. 2 is a diagram of an example of a display interface on a vehicle-mounted device according to an embodiment of this application;
FIG. 3 is a diagram of an example of a display interface on a terminal device according to an embodiment of this application;
FIG. 4 is a diagram of an example of a display interface on a terminal device according to an embodiment of this application;
FIG. 5 is a schematic flowchart of an example of a car crash detection method according to an embodiment of this application;
FIG. 6 is a schematic flowchart of an example of a car crash detection method according to an embodiment of this application;
FIG. 7 is a diagram of an example of a display interface of a co-riding determining process in a car crash detection method according to an embodiment of this application;
FIG. 8 is a diagram of an example of a display interface of a co-riding determining process in a car crash detection method according to an embodiment of this application;
FIG. 9 is a block diagram of an example of a hardware structure of a terminal device according to this application; and
FIG. 10 is a diagram of a chip system according to this application.

### DESCRIPTION OF EMBODIMENTS

The following clearly and completely describes the technical solutions in embodiments of this application with reference to accompanying drawings in embodiments of this application.

Terms used in the following embodiments are merely intended to describe specific embodiments, but are not intended to limit this application. As used in the specification and the appended claims of this application, terms "one", "a" and "this" of singular forms used in this specification and the appended claims of this application are also intended to include expressions such as "one or more", unless otherwise specified in the context clearly. It should be further understood that, in embodiments of this application, "one or more" refers to one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

"A plurality of" in embodiments of this application means "greater than or equal to two". It should be noted that in the descriptions of embodiments of this application, the terms such as "first" and "second" are merely intended for distinction in description, but should not be construed as indicating or implying relative importance or indicating or implying a sequence.

In addition, aspects or features of this application may be implemented as a method, an apparatus, or a product that uses standard programming and/or engineering technologies. The term "product" used in embodiments of this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

For ease of understanding, the following first uses an example to describe a car crash detection principle based on a terminal device in related knowledge and a related technology of car crashes.

It may be understood that a car crash is generally an event in which a person is injured and/or a vehicle is damaged due to collision, friction, or the like between vehicles or between a vehicle and another traffic object in a road traffic accident. The car crash types in various scenarios include front-end collision, side-impact collision, rear-end collisions, and rollover collision.

For example, the terminal device generally performs car crash detection based on sensors inside the terminal device. For example, the terminal device may obtain corresponding data based on a GPS (Global Positioning System) positioning device, an acceleration sensor, a gyroscope, a barometer, a sound sensor, or the like of the terminal device, and the terminal device identifies and detects a car crash based on the obtained corresponding data or through data fusion. For example, if the terminal device determines one or more of the following: a sudden change of a speed of a user, a sudden change of a moving direction of the user, a change to a preset extent of barometric pressure around the user, or occurrence of a sound at a loud sound level around the user, the terminal device determines that a car crash happens to the user, and the terminal device automatically make a call for emergency rescue and call an emergency contact of the user for help.

In some scenarios, the terminal device often gives false car crash alarms. For example, when a user carries the terminal device while skiing, the speed of the user often changes greatly, the moving direction of the user may also change, and barometric pressure around the user also increases with an increase of the skiing speed. After detecting a change of such environmental data, the terminal device often mistakenly considers that a car crash happens to the user. For another example, when the user carries the terminal device while riding a roller coaster, both the speed and the moving direction of the user change greatly, and barometric pressure around the user also increases with an increase of the speed. In addition, large noise is generated around the user. After detecting a change of such environmental data, the terminal device also mistakenly considers that a car crash happens to the user.

In some other scenarios, the sensor of the terminal device may fail to detect a change of the environment data possibly because there is a sensor fault, the change of the environment data does not reach a preset threshold, and the like. In this case, the terminal device cannot detect occurrence of a car crash.

In conclusion, in the existing solution of car crash detection based on the terminal device, some car crashes cannot be detected due to a limited capability to identify and detect a car crash, a state of the user in a special scenario is identified as a car crash, and a false car crash alarm is given.

In view of this, this application provides a car crash detection method. In the car crash detection method, a vehicle-mounted device and a terminal device in a same vehicle sense each other and exchange traveling data. When a car crash happens, the vehicle-mounted device and the terminal device notify each other of whether a traveling abnormality is detected, to determine whether to make a call for emergency rescue. Through double detection by the vehicle-mounted device and the terminal device, traveling abnormality detection results of the vehicle-mounted device and the terminal device are fully considered. Vehicle status detection by the vehicle-mounted device may be combined with car crash detection and emergency rescue calling capabilities of the terminal device, thereby improving car crash detection accuracy. In addition, when a user carries the terminal device while participating in an activity like skiing or riding a roller coaster, because the condition that the terminal device and the vehicle-mounted device are in the vehicle is not met, the terminal device does not determine that a car crash happens during skiing and roller coaster riding, and does not make a call for emergency rescue during skiing and roller coaster riding, thereby avoiding false alarms in special cases such as skiing and roller coaster riding.

The following uses an example to describe the car crash detection method provided in this application. A person skilled in the art may learn that the following content is merely used as an example, and is not intended to limit the protection scope of this application.

It should be noted that, in embodiments of this application, terms "terminal device", "electronic device", and "terminal" all represent a same meaning, the three expressions are interchangeable, terms "vehicle-mounted device", "head unit", and "vehicle-mounted terminal" represent a same meaning, and therefore the three expressions are interchangeable.

In addition, without special differentiation, "call for emergency rescue" and "emergency call" in embodiments of this application may represent a same meaning, and "abnormality" and "traveling abnormality" may represent a same meaning.

For ease of understanding, the following first describes an application scenario of a car crash detection system in embodiments of this application.

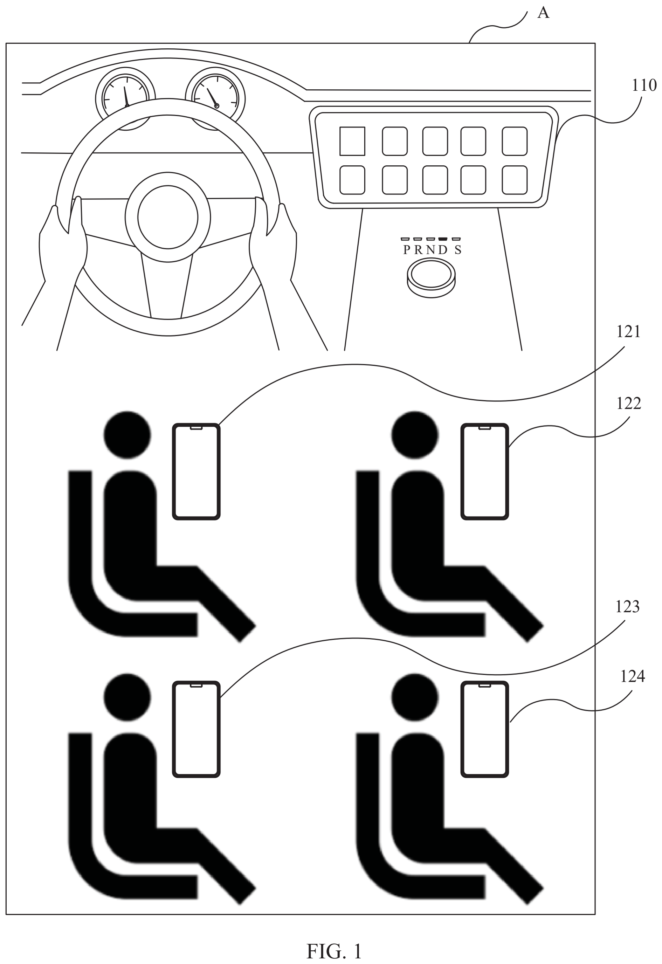

FIG. 1 is a diagram of a car crash detection system according to an embodiment of this application. The car crash detection method in embodiments of this application may be applied to the car crash detection system shown in FIG. 1.

As shown in FIG. 1, the car crash detection system includes a vehicle-mounted device 110 and a terminal device (in this application, the terminal device may also be referred to as an electronic device). The vehicle-mounted device 110 and the terminal device are both in a same vehicle A.

For example, as shown in FIG. 1, in this embodiment, the car crash detection system includes four terminal devices: a first terminal device 121, a second terminal device 122, a third terminal device 123, and a fourth terminal device 124. The vehicle-mounted device 110 may exchange traveling abnormality data (the traveling abnormality data may also be referred to as car crash detection data) with each of the four terminal devices, to fully use car crash detection capabilities of the vehicle-mounted device 110 and the terminal devices in the vehicle, thereby improving car crash detection accuracy of the car crash detection system, each terminal device, and the vehicle-mounted device, and further reducing false car crash alarms.

It may be understood that the car crash detection system may include all the terminal devices in the vehicle A, or may include a part of the terminal devices in the vehicle A. This is not limited in this application.

In this embodiment of this application, the vehicle-mounted device 110 in the car crash detection system may also be referred to as a head unit. The head unit may be installed in a center console of the vehicle A. The head unit is a short name of a vehicle-mounted infotainment product in the vehicle A, and can implement information communication between a person and the vehicle, between the vehicle and an outside, or between vehicles. The head unit can provide many services and functions for passengers in the vehicle, for example, audio and video playback, route navigation, vehicle function controlling, car crash detection, and automatic call for emergency rescue.

In this embodiment of this application, the terminal device (for example, the first terminal device 121, the second terminal device 122, the third terminal device 123, and the fourth terminal device 124) in the car crash detection system is a terminal device held by a person in the vehicle A. Generally, the terminal device is a portable terminal device. For example, the terminal device may be a smartphone, a tablet computer, a notebook computer, a foldable smartphone, or a wearable device. A specific form of the terminal device is not limited in this application. The person in the vehicle A may be a driver of the vehicle A, or may be a passenger in the vehicle A. This is not limited in this application.

It may be understood that, in this embodiment of this application, both the vehicle-mounted device 110 and the terminal device in the car crash detection system have a car crash detection function.

It should be understood that there is a communication connection between the vehicle-mounted device 110 and the terminal device in the car crash detection system, to implement exchange of traveling abnormality data. The communication connection may be a wired communication connection, or may be a wireless communication connection.

In this embodiment of this application, wireless communication may be one or more of a wireless local area network (WLAN, Wireless Local Area Network), a wireless local area network (Wi-Fi, Wireless Fidelity), Bluetooth (Bluetooth), Bluetooth low energy (BLE, Bluetooth Low Energy), mobile communication, radio frequency identification (RFID), infrared (Infrared), and ultra-wideband (UWB, Ultra-Wideband).

In some embodiments, the vehicle-mounted device 110 and the terminal device in the car crash detection system are communicatively connected through Bluetooth. Because the car crash detection method in embodiments of this application can improve car crash detection accuracy only when the vehicle-mounted device 110 and the terminal device are in the same vehicle A, Bluetooth communication is a low-power short-range wireless communication technology with a communication range of about 10 meters generally, which can fully cover an entire vehicle, and Bluetooth is popular among various terminal devices, Bluetooth communication is selected for connection, to facilitate application of the car crash detection method in various terminal devices.

In some embodiments, the vehicle-mounted device 110 and the terminal device in the car crash detection system are communicatively connected through Bluetooth low energy.

In some other embodiments, the vehicle-mounted device 110 and the terminal devices in the car crash detection system may access a Wi-Fi network provided by an access point (access point, AP) like a router, to establish a Wi-Fi connection between the vehicle-mounted device 110 and the terminal devices.

In some other embodiments, the vehicle-mounted device 110 and the terminal devices in the car crash detection system may log in to a same account (for example, a Huawei account), and are interconnected via one or more servers.

In some embodiments, the wireless communication connection between the vehicle-mounted device 110 and the terminal device may also be implemented through message broadcasting. For example, the vehicle-mounted device 110 first interacts with the terminal device in the vehicle A through local network broadcasting. After it is confirmed that the terminal device and the vehicle-mounted device 110 are co-riding, the vehicle-mounted device 110 and the terminal device record a device identifier of each other, to identify broadcast information sent by each other based on the device identifier of each other in a subsequent process, thereby implementing interactive communication between the vehicle-mounted device 110 and the terminal device. Local network broadcasting may be broadcasting through Bluetooth, Bluetooth low energy, WLAN, infrared, ZigBee, Wi-Fi, or the like. This is not limited in this application.

In some embodiments, the wireless communication connection between the vehicle-mounted device 110 and the terminal device in the car crash detection system may also include a point-to-point communication connection formed through broadcasting. This is not limited in this application.

The following uses an example to describe an application scenario of the car crash detection method in embodiments of this application with reference to the car crash detection system in FIG. 1. The following embodiment is described by using an example of interaction between the vehicle-mounted device 110 and the first terminal device 121. It may be understood that the vehicle-mounted device 110 may alternatively interact with another terminal device in the vehicle A in a same manner. Details are not described in this application.

In this embodiment of this application, before car crash detection is performed, it needs to be first determined that the vehicle-mounted device 110 and the first terminal device 121 are in the same vehicle (that is, it is determined that the vehicle-mounted device 110 and the first terminal device 121 are co-riding). Therefore, the following first uses examples of different manners of determining that the vehicle-mounted device 110 and the first terminal device 121 are in the same vehicle for description.

In some embodiments, in the car crash detection system shown in FIG. 1, after the vehicle A is started, the vehicle-mounted device 110 obtains traveling data of the vehicle A, and the vehicle-mounted device 110 determines, based on the traveling data of the vehicle A, whether the vehicle A enters a traveling mode (the traveling mode may also be referred to as a traveling state). If it is determined that the vehicle A enters the traveling mode, the vehicle-mounted device 110 sends a broadcast signal to the surrounding. The broadcast signal may include an identifier of the vehicle-mounted device 110 and the traveling data of the vehicle A. Alternatively, if it is determined that the vehicle A does not enter the traveling mode, the vehicle-mounted device 110 continuously obtains the traveling data of the vehicle A and determines whether the vehicle A enters the traveling mode.

For example, the traveling data of the vehicle A that is obtained by the vehicle-mounted device 110 may include one or more of a vehicle speed, an engine rotational speed, a traveling direction, vehicle location information, and the like.

After receiving the broadcast signal of the vehicle-mounted device 110, the first terminal device 121 determines whether the first terminal device 121 is in a riding mode (the riding mode may also be referred to as a riding state). If determining that the first terminal device 121 is in the riding mode, the first terminal device 121 matches the received traveling data of the vehicle A with traveling data detected by the first terminal device 121, to determine whether the first terminal device 121 is in the vehicle A in which the vehicle-mounted device 110 is located. If determining that the first terminal device 121 is in a non-riding mode, the first terminal device 121 ignores the received broadcast signal.

If determining that the first terminal device 121 is in the vehicle A in which the vehicle-mounted device 110 is located, the first terminal device 121 records an identifier of the vehicle-mounted device 110, and broadcasts an identifier and a co-riding identifier of the first terminal device 121. The co-riding identifier identifies that the first terminal device 121 and the vehicle-mounted device 110 are in the same vehicle. If determining that the first terminal device 121 is not in the vehicle A in which the vehicle-mounted device 110 is located, the first terminal device 121 ignores the received broadcast signal of the vehicle-mounted device 110.

After receiving the identifier and the co-riding identifier of the first terminal device 121, the vehicle-mounted device 110 stores the identifier of the first terminal device 121, and determines, based on the co-riding identifier, that the first terminal device 121 is in the vehicle A.

For example, the first terminal device 121 may continuously obtain speed information and location information of the first terminal device 121. When determining that a speed of the first terminal device 121 is continuously greater than or equal to a threshold (for example, 30 meters/second) and the location information of the first terminal device 121 continuously changes, the first terminal device 121 determines that the first terminal device 121 is in the riding mode. Otherwise, the first terminal device 121 determines that the first terminal device 121 is not in the riding mode.

For example, the traveling data may include a speed, and the first terminal device 121 may determine, in the following manner, whether the first terminal device 121 is in the vehicle A in which the vehicle-mounted device 110 is located: The speed in the received traveling data of the vehicle A is compared with the speed in the traveling data detected by the first terminal device 121. If the speeds remain the same or a speed difference between the speeds remains less than a preset threshold at different moments within a period of time, it is determined that the first terminal device 121 is in the vehicle on which the vehicle-mounted device 110 is located. Otherwise, it is determined that the first terminal device 121 is not in the vehicle in which the vehicle-mounted device 110 is located.

For example, the co-riding identifier may include the identifiers of the two devices (that is, an identifier of the vehicle-mounted device 110 and an identifier of the first terminal device 121) and a co-riding mark. The co-riding identifier represents that the two devices respectively corresponding to the two device identifiers are in the same vehicle.

In some other embodiments, in the car crash detection system shown in FIG. 1, after the vehicle A is started, the vehicle-mounted device 110 obtains traveling data of the vehicle A, and the vehicle-mounted device 110 determines, based on the traveling data of the vehicle A, whether the vehicle A enters a traveling mode. If it is determined that the vehicle A enters the traveling mode, the vehicle-mounted device 110 sends a broadcast signal to the surrounding. The broadcast signal may include an identifier of the vehicle-mounted device 110. Alternatively, if it is determined that the vehicle A does not enter the traveling mode, the vehicle-mounted device 110 continuously obtains traveling state information of the vehicle A and determines whether the vehicle A enters the traveling mode.

After receiving the broadcast signal of the vehicle-mounted device 110, the first terminal device 121 determines whether the first terminal device 121 is in a riding mode. If determining that the first terminal device 121 is in the riding mode, the first terminal device 121 broadcasts an identifier of the first terminal device 121 and traveling data detected by the first terminal device 121. If determining that the first terminal device 121 is in a non-riding mode, the first terminal device 121 ignores the received broadcast signal.

After receiving the broadcast signal of the first terminal device 121, the vehicle-mounted device 110 matches the traveling data of the vehicle A with the traveling data detected by the first terminal device 121, to determine whether the first terminal device 121 is in the vehicle A in which the vehicle-mounted device 110 is located.

If determining that the first terminal device 121 is in the vehicle A in which the vehicle-mounted device 110 is located, the vehicle-mounted device 110 records the identifier of the first terminal device 121, and broadcasts an identifier and a co-riding identifier of the vehicle-mounted device 110. If determining that the first terminal device 121 is not in the vehicle A in which the vehicle-mounted device 110 is located, the vehicle-mounted device 110 ignores the received broadcast signal of the first terminal device 121.

After receiving the identifier and the co-riding identifier of the vehicle-mounted device 110, the first terminal device 121 stores the identifier of the vehicle-mounted device 110, and the first terminal device 121 determines, based on the co-riding identifier, that the first terminal device 121 is in the vehicle A.

It may be understood that the identifier is used as a unique identifier of a corresponding device, and may be preset or may be randomly generated. This is not limited in this application.

For example, the identifier of the vehicle-mounted device 110 is used to identify the vehicle-mounted device 110. In addition, because the vehicle-mounted device 110 is in the vehicle A, and the vehicle A has only one vehicle-mounted device 110, the identifier of the vehicle A and the identifier of the vehicle-mounted device 110 mentioned in embodiments of this application may be a same identifier.

In this embodiment, after the vehicle-mounted device 110 and the first terminal device 121 determine that the vehicle-mounted device 110 and the first terminal device 121 are in the same vehicle A, the vehicle-mounted device 110 records the identifier of the first terminal device 121, and the first terminal device 121 also records the identifier of the vehicle-mounted device 110. In a traveling process of the vehicle A, the vehicle-mounted device 110 may identify and obtain broadcast information of the first terminal device 121 based on the stored identifier of the first terminal device 121, and the first terminal device 121 may identify and obtain broadcast information of the vehicle-mounted device 110 based on the stored identifier of the vehicle-mounted device 110. Details are not described in this application.

In some embodiments, after the vehicle-mounted device 110 and the first terminal device 121 determine, through broadcast communication, that the vehicle-mounted device 110 and the first terminal device 121 are co-riding, a point-to-point communication connection may also be established between the vehicle-mounted device 110 and the first terminal device. A specific process of establishing the point-to-point communication connection is a conventional technology. Details are not described in this application.

In some other embodiments, a point-to-point communication connection may be directly established between the vehicle-mounted device 110 and the first terminal device 121, to ensure that the vehicle-mounted device 110 and the first terminal device 121 are in the same vehicle.

For example, after the first terminal device 121 obtains a connection request of the vehicle-mounted device 110, the first terminal device 121 sends, in response to the connection request of the vehicle-mounted device, response information agreeing on the connection, to complete the point-to-point communication connection between the vehicle-mounted device 110 and the first terminal device 121.

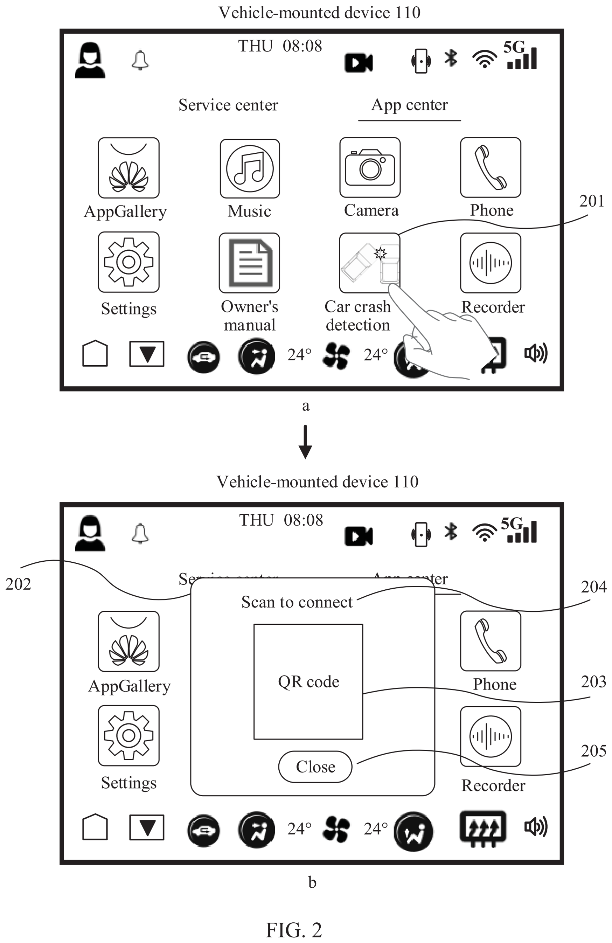

For example, car crash detection application is configured in the vehicle-mounted device 110 of the vehicle A. As shown in FIG. 2, a in FIG. 2 is a diagram of an interface of the vehicle-mounted device 110. In a in FIG. 2, after a user taps a car crash detection icon 201, the display interface jumps from that shown in a in FIG. 2 to that shown in b in FIG. 2. As shown in b in FIG. 2, on the display interface, a QR code scanning prompt box 202 is displayed, and a QR code 203, prompt information 204 "Please scan the QR code for connection", and a "Close" control 205 are displayed in the QR code scanning prompt box 202.

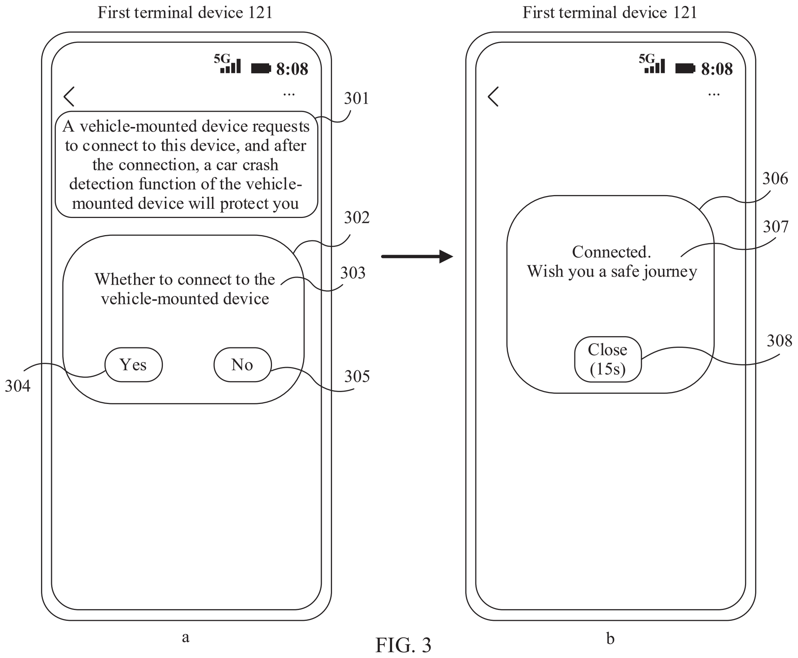

After a terminal device holder carries the first terminal device 121 having the car crash detection function into the vehicle A, the terminal device holder scans the QR code 203 on the vehicle-mounted device 110 with the first terminal device 121, and an interface shown in a in FIG. 3 is displayed on the display of the first terminal device 121.

As shown in a in FIG. 3, a first prompt box 301 and a second prompt box 302 are displayed in the diagram of the interface. The first prompt box 301 displays information related to the car crash detection function of the vehicle-mounted device, for example, "The vehicle-mounted device requests to connect to this device, and after the connection, the car crash detection function of the vehicle-mounted device will protect you". The second prompt box 302 displays information 303 "Whether to connect to the vehicle-mounted device", a "Yes" control 304, and a "No" control 305.

As shown in a in FIG. 3, the terminal device holder taps the "Yes" control 304, and a point-to-point communication connection is implemented between the vehicle-mounted device 110 and the first terminal device 121. The display interface of the first terminal device 121 jumps from that shown in a in FIG. 3 to that shown in b in FIG. 3. As shown in b in FIG. 3, a third prompt box 306 is displayed in the diagram of the interface, and a connection success prompt message 307 and a "Close" control 308 are displayed in the third prompt box 306. The connection success prompt message may be "Connected. Wish you a good trip". Certainly, the prompt message may also be other content, which is not enumerated herein.

In some embodiments, in the interface shown in a in FIG. 3, if the terminal device holder taps the "Close" control 308, the third prompt box 306 is closed. In addition, a countdown may be further displayed in the "Close" control 308. If the user does not tap the "Close" control 308, the third prompt box 306 is automatically hidden when the countdown ends.

For another example, the vehicle-mounted device 110 in the vehicle A broadcasts a communication connection request. After the terminal device holder carries the first terminal device 121 having the car crash detection function into the vehicle A, the first terminal device 121 scans a broadcast signal and displays a connection request interface on the display. After the user agrees on the connection request of the vehicle-mounted device 110 on the connection request interface, a point-to-point communication connection is established between the vehicle-mounted device 110 and the first terminal device 121. For example, the first terminal device 121 may display the connection request interface shown in a in FIG. 3. The terminal device holder taps the "Yes" control 304 in a in FIG. 3, and a point-to-point communication connection is implemented between the vehicle-mounted device 110 and the first terminal device 121. The display interface of the first terminal device 121 jumps from that shown in a in FIG. 3 to that shown in b in FIG. 3. For details about a in FIG. 3 and b in FIG. 3, refer to the foregoing description. Details are not described herein again.

After the point-to-point communication connection between the vehicle-mounted device 110 and the first terminal device 121 is completed based on the connection request of the vehicle-mounted device 110, it may be determined that the vehicle-mounted device 110 and the first terminal device are in the same vehicle. In a traveling process of the vehicle A, the vehicle-mounted device 110 obtains traveling state information of the vehicle A, and the vehicle-mounted device 110 determines, based on the traveling state information of the vehicle A, whether the vehicle A enters the traveling mode. If it is determined that the vehicle A enters the traveling mode, the vehicle-mounted device 110 sends prompt information to the first terminal device 121, where the prompt information prompts the first terminal device 121 that the vehicle A has entered the traveling mode, and the prompt information may include traveling state information of the vehicle A. If it is determined that the vehicle A does not enter the traveling mode, the vehicle-mounted device 110 continuously obtains traveling state information of the vehicle A and determines whether the vehicle A has entered the traveling mode.

For example, the traveling state information of the vehicle A may include a vehicle speed and location information of the vehicle A at a plurality of moments. The traveling state information of the vehicle A in the prompt information may include a vehicle speed and location information corresponding to a moment at which the vehicle A enters the traveling mode.

It may be understood that, in this embodiment of this application, because the vehicle-mounted device 110 is in the vehicle A, when the vehicle-mounted device 110 determines that the vehicle A enters the traveling mode, the vehicle-mounted device 110 also enters the traveling mode; or when the vehicle-mounted device 110 determines that the vehicle A exits the traveling mode, the vehicle-mounted device 110 also exits the traveling mode.

It may be understood that a specific point-to-point communication connection manner between the vehicle-mounted device 110 and the first terminal device 121 may be WLAN, Wi-Fi, Bluetooth, Bluetooth low energy, mobile communication, radio frequency identification, infrared, or the like. This is not limited in this application.

In the embodiment, after the point-to-point communication connection between the vehicle-mounted device 110 and the first terminal device 121 is completed based on the connection request of the vehicle-mounted device 110, it may be determined that the vehicle-mounted device 110 and the first terminal device 121 are co-riding.

After the process of determining whether the vehicle-mounted device 110 and the first terminal device are co-riding is described, the following uses an example to describe a data exchange process between the vehicle-mounted device 110 and the first terminal device 121 in a traveling process of the vehicle A with reference to the accompanying drawings.

In some embodiments, the vehicle-mounted device 110 may detect at any time whether the vehicle A is in the traveling mode, and whether an abnormality happens to the vehicle A. If the vehicle-mounted device 110 determines that no abnormality happens to the vehicle A and a speed is less than a preset speed threshold or the vehicle A is in a stationary state, the vehicle-mounted device 110 exits the traveling mode and sends traveling mode exit information to the first terminal device 121. After the first terminal device 121 receives the traveling mode exit information, the first terminal device 121 may exit the riding mode. If the vehicle-mounted device 110 determines that no abnormality happens to the vehicle A and the speed is greater than or equal to the preset speed threshold, the vehicle-mounted device 110 maintains the traveling mode, and the vehicle-mounted device 110 may further send traveling mode maintaining information to the first terminal device 121. The first terminal device 121 may reply to the vehicle-mounted device 110 with riding mode maintaining information.

In some embodiments, for a case in which a point-to-point communication connection is established between the terminal device and the vehicle-mounted device 110, the vehicle-mounted device 110 and the first terminal device 121 may exchange traveling data such as location information and speed information at any time to determine whether the vehicle-mounted device 110 and the first terminal device 121 are co-riding. If it is determined that the vehicle-mounted device 110 and the first terminal device 121 are co-riding, the point-to-point communication connection between the vehicle-mounted device 110 and the first terminal device 121 is maintained. If it is determined that the vehicle-mounted device 110 and the first terminal device 121 are no longer co-riding, the point-to-point connection between the vehicle-mounted device 110 and the first terminal device 121 is disconnected. Whether the vehicle-mounted device 110 and the first terminal device 121 are co-riding may be determined by the vehicle-mounted device 110, or may be determined by the first terminal device 121. This is not limited in this application.

In some embodiments, when the vehicle-mounted device 110 determines that an abnormality happens to the vehicle A (for example, a car crash happens), the vehicle-mounted device 110 sends, to the first terminal device 121, indication information indicating that the vehicle A has a traveling abnormality. After receiving the indication information, the first terminal device 121 may determine a severity of the abnormality based on information (that is, first traveling data) collected by a sensor of the first terminal device 121. If it is determined that the severity is greater than or equal to a preset abnormality threshold (that is, it is determined that a severe car crash may happen), prompt information of needing to call police is fed back to the vehicle-mounted device 110, and car crash prompt information is displayed. If it is determined that the severity is less than a preset abnormality threshold (that is, it is determined that the car crash is not severe), prompt information of not needing to call police is fed back to the vehicle-mounted device 110.

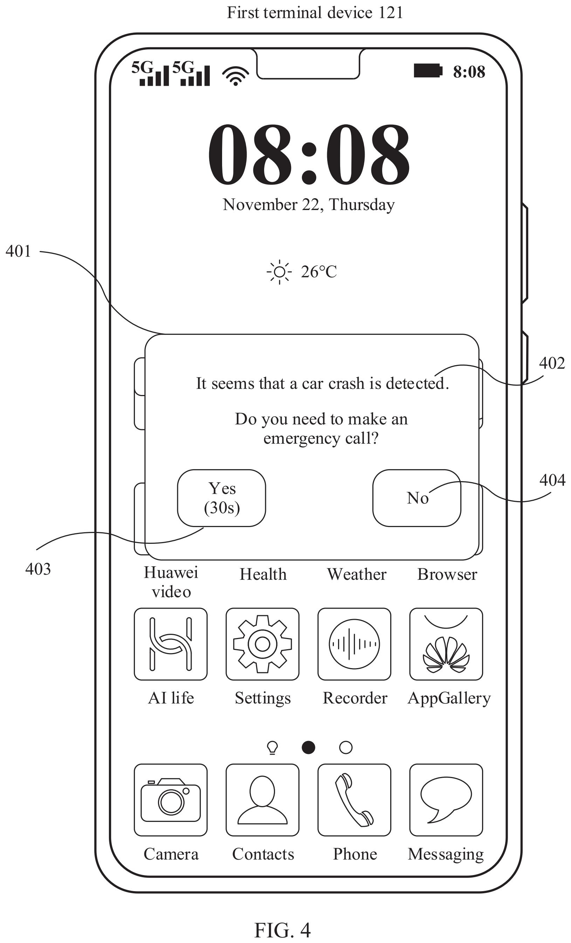

FIG. 4 is a diagram of an interface on which a first terminal device 121 displays car crash prompt information according to an embodiment of this application. As shown in FIG. 4, a prompt box 401 is displayed on a display of the first terminal device 121, and prompt information 402 "It seems that a car crash is detected. Do you need to make an emergency call?" may be displayed in the prompt box 401. In addition, a "Yes" control 403 and a "No" control 404 may be further displayed in the prompt box 401, and a countdown (for example, 30s) is further displayed in the "Yes" control 403. If a user taps the "Yes" control 403, or fails to tap any control until the countdown ends, the first terminal device 121 makes a call for emergency rescue, for example, can call an emergency contact stored in the first terminal device 121, or can call police. If the user taps the "No" control 404 before the countdown ends, the prompt box 401 is automatically hidden, and the first terminal device 121 does not make a call.

It may be understood that the car crash prompt information may alternatively be displayed in another form. For example, the countdown may be displayed in a countdown display box, and the countdown display box may be independent of the "Yes" control 403. Alternatively, the prompt information displayed in the prompt box 401 may be other similar content. Details are not described in this application.

In some other embodiments, when traveling abnormality indication information sent by the vehicle-mounted device 110 is not received, if the first terminal device 121 detects that an abnormality happens to a vehicle and a severity is greater than or equal to a preset abnormality threshold, the first terminal device 121 sends, to the vehicle-mounted device 110, query information about whether an abnormality happens: If the vehicle-mounted device 110 replies that no abnormality happens, the first terminal device 121 ignores the detected abnormality. If the vehicle-mounted device 110 replies that an abnormality occurs or fails to reply within a preset time period, the first terminal device 121 displays an interface of car crash prompt information shown in FIG. 4. If the user taps the "Yes" control 403, or the user still does not tap any control until the countdown ends, the first terminal device 121 makes an emergency call. For example, the first terminal device 121 may call an emergency contact pre-stored in the first terminal device 121 or may call police. If the user taps the "No" control 404 before the countdown ends, the prompt box 401 is automatically hidden, and the first terminal device 121 does not make an emergency call.

In some embodiments, when traveling abnormality indication information sent by the vehicle-mounted device 110 is not received, if the first terminal device 121 detects that an abnormality happens and a severity is less than a preset abnormality threshold, the first terminal device 121 ignores the detected abnormality.

It may be understood that the process of data exchange between the vehicle-mounted device 110 and the first terminal device 121 is described by using a case in which a point-to-point communication connection is established between the terminal device and the vehicle-mounted device 110. The process is also applicable to a case in which the vehicle-mounted device 110 and the first terminal device 121 interact through broadcast communication, and a difference lies merely in specific information exchange manners. When the vehicle-mounted device 110 and the first terminal device 121 interact through broadcast communication, the vehicle-mounted device 110 and the first terminal device 121 identify, based on the recorded identifier of each other, broadcast information sent by each other, thereby implementing interactive communication. Details are not described in this application.

It should be understood that in this application, the foregoing examples, interfaces of the terminal device (and the vehicle-mounted device), operations of the user, and the like are merely examples, and do not constitute a specific limitation on embodiments of this application. For example, in some other embodiments of this application, the icons displayed on the interfaces of the foregoing provided terminals may include more or fewer icons than those displayed on the interfaces shown in any one of the foregoing figures, or some icons are combined, or some icons are split, or different icons are used. This is not limited herein in embodiments of this application.

It should be further understood that the solution shown in any one of the foregoing examples or in any one of the foregoing figures may be an independent solution, or the solution formed by combining a plurality of the foregoing examples or the solution formed by combining a plurality of the foregoing figures may be an independent solution. This is not limited herein in this application.

Based on the foregoing application scenario, the car crash detection system shown in FIG. 1, and the foregoing examples, the following describes a procedure of a car crash detection method provided in this application.

An embodiment of this application provides a car crash detection method, applied to a terminal device. The method includes: detecting first traveling data of a vehicle; receiving first abnormality prompt information sent by a vehicle-mounted device; and determining, based on the first traveling data and the first abnormality prompt information, whether to make a call for emergency rescue, where the vehicle-mounted device and the terminal device are in the vehicle, and there is a communication connection between the vehicle-mounted device and the terminal device.

It may be understood that the terminal device may determine, based on the detected first traveling data of the vehicle, whether the vehicle has a traveling abnormality, and the first abnormality prompt information sent by the vehicle-mounted device is obtained after the vehicle-mounted device detects whether the vehicle has a traveling abnormality. Therefore, when the terminal device determines, based on the first traveling data and the first abnormality prompt information, whether to make a call for emergency rescue, detection results of the terminal device and the vehicle-mounted device on whether the vehicle has a traveling abnormality are fully considered, thereby improving car crash detection accuracy. In addition, in the car crash detection method, it is limited that the vehicle-mounted device and the terminal device are in the same vehicle, thereby avoiding an incorrect call for rescue of the terminal device in a special case like skiing or riding a roller coaster.

It should be understood that, in different scenarios, specific content of the first abnormality prompt information sent by the vehicle-mounted device may be different.

For example, when the vehicle-mounted device first detects that the vehicle has a traveling abnormality, the first abnormality prompt information sent by the vehicle-mounted device may be indication information indicating that the vehicle-mounted device detects that the vehicle has a traveling abnormality. In this case, after the vehicle-mounted device detects that the vehicle has a traveling abnormality, the vehicle-mounted device sends indication information to the terminal device, and then the terminal device determines, based on the received indication information and the detected first traveling data, whether to make a call for emergency rescue.

For another example, when the terminal device first detects that the vehicle has a traveling abnormality, the first abnormality prompt information sent by the vehicle-mounted device may be a response status of the vehicle-mounted device on indication information sent by the terminal device. In this case, after the terminal device determines, based on the first traveling data, that the vehicle has a traveling abnormality, the terminal device sends the indication information to the vehicle-mounted device, the terminal device obtains the response status of the vehicle-mounted device to the indication information, and the terminal device determines, based on the response status of the vehicle-mounted device to the indication information, whether to make a call for emergency rescue.

An embodiment of this application further provides a car crash detection method, applied to a vehicle-mounted device. The method includes: The vehicle-mounted device detects whether a traveling abnormality happens to a vehicle in which the vehicle-mounted device is located, to obtain a detection result; receiving second abnormality prompt information sent by a terminal device; and determining, based on the detection result and the second abnormality prompt information, whether to make a call for emergency rescue, where the vehicle-mounted device and the terminal device are in the vehicle, and there is a communication connection between the vehicle-mounted device and the terminal device.

It may be understood that the second abnormality prompt information sent by the terminal device is obtained by the terminal device by detecting whether the vehicle has a traveling abnormality. Therefore, when the vehicle-mounted device determines, based on the detection result of the vehicle-mounted device on whether a traveling abnormality happens to the vehicle and the second abnormality prompt information, whether to make a call for emergency rescue, the detection results of the terminal device and the vehicle-mounted device on whether the vehicle has a traveling abnormality are fully considered, thereby improving the car crash detection accuracy. In the car crash detection method, it is limited that the vehicle-mounted device and the terminal device are in the same vehicle, thereby avoiding an incorrect call for rescue of the terminal device in a special case like skiing or riding a roller coaster.

It should be understood that, in different scenarios, specific content of the second abnormality prompt information sent by the terminal device may be different.

For example, when the vehicle-mounted device first detects that the vehicle has a traveling abnormality, the second abnormality prompt information sent by the terminal device may be a response status of the terminal device to the indication information sent by the vehicle-mounted device. In this case, after the vehicle-mounted device detects that a traveling abnormality happens to the vehicle, the vehicle-mounted device sends the indication information to the terminal device, then the vehicle-mounted device obtains the response status of the terminal device to the indication information, and finally the vehicle-mounted device determines, based on the response status of the terminal device to the indication information, whether to make a call for emergency rescue.

For another example, when the terminal device first detects that the vehicle has a traveling abnormality, the second abnormality prompt information sent by the terminal device may be indication information indicating that the terminal device detects that there is a traveling abnormality. In this case, after the terminal device determines, based on the first traveling data, that the vehicle has a traveling abnormality, the terminal device sends indication information to the vehicle-mounted device. After the vehicle-mounted device receives the indication information, the vehicle-mounted device detects whether the vehicle in which the vehicle-mounted device is located has a traveling abnormality to obtain a detection result, and the vehicle-mounted device determines, based on the detection result, whether to make a call for emergency rescue.

For ease of understanding, the following uses examples to describe specific processes of the car crash detection method in different scenarios with reference to the accompanying drawings.

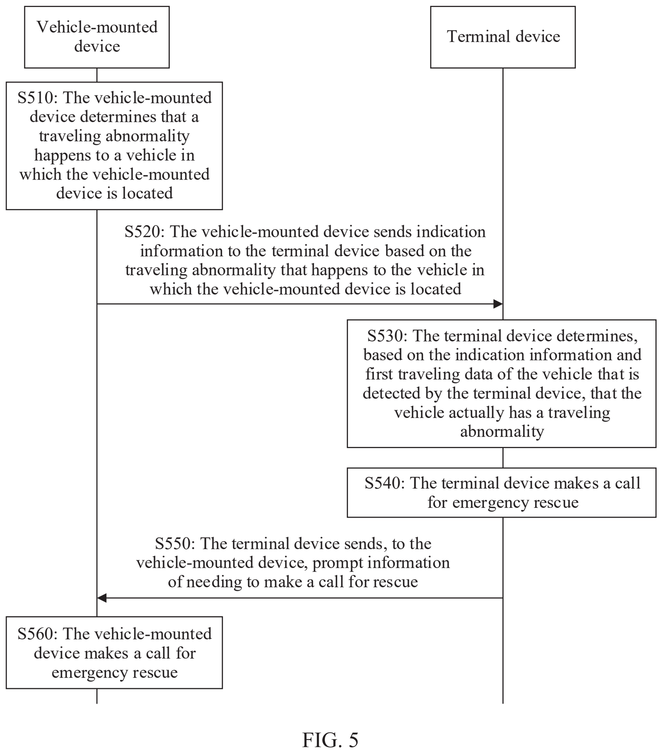

FIG. 5 is a schematic flowchart of an example according to an embodiment of this application. Devices in the flowchart include a vehicle-mounted device and a terminal device, and the vehicle-mounted device and the terminal device are in a same vehicle.

In the embodiment shown in FIG. 5, the vehicle-mounted device first detects that a vehicle has a traveling abnormality, first abnormality prompt information sent by the vehicle-mounted device to the terminal device is indication information indicating that the vehicle-mounted device detects that the vehicle has a traveling abnormality, and second abnormality prompt information sent by the terminal device to the vehicle-mounted device is a response status of the terminal device to the indication information sent by the vehicle-mounted device.

As shown in FIG. 5, this procedure includes the following steps: S510 to S560.

S510: The vehicle-mounted device determines that a traveling abnormality happens to the vehicle in which the vehicle-mounted device is located.

It may be understood that the vehicle-mounted device detects whether a traveling abnormality happens to the vehicle in which the vehicle-mounted device is located, to obtain a detection result. In the embodiment shown in FIG. 5, the detection result is that an abnormality happens to the vehicle, that is, the vehicle-mounted device determines that a traveling abnormality happens to the vehicle. In another embodiment, the detection result may alternatively be that the vehicle does not have a traveling abnormality, that is, the vehicle-mounted device determines that no traveling abnormality happens to the vehicle, and the case of no traveling abnormality may be a state of the vehicle in most time. Details are not described in this application.

It should be understood that the vehicle-mounted device determines whether the vehicle has an abnormality in many manners. The following uses an example for description.

In some embodiments, the vehicle-mounted device may be a head unit of the vehicle, and the vehicle-mounted device may obtain traveling data of the vehicle. Therefore, the vehicle-mounted device may determine, based on the obtained traveling data of the vehicle, whether a traveling abnormality happens to the vehicle. In addition, the vehicle-mounted device may directly obtain, from the vehicle, information about whether a traveling abnormality happens to the vehicle.

For example, the vehicle-mounted device determines, based on the obtained traveling data of the vehicle, whether a traveling abnormality happens to the vehicle. For example, the vehicle-mounted device may determine, based on one or more of a vehicle speed, an engine rotational speed, a traveling direction, vehicle location information, and the like, whether a traveling abnormality happens to the vehicle. For example, a sudden change of the vehicle speed, a sudden change of the vehicle traveling direction, a sudden change of the vehicle location information, and the like may indicate to some extent that a traveling abnormality happens to the vehicle. Details are not described in this application.

In some other embodiments, the vehicle-mounted device determines, based on sensor data in the vehicle, whether a traveling abnormality happens to the vehicle, for example, based on data such as an engine temperature, a vehicle speed, and a tire pressure. Details are not described in this application.

In some other embodiments, the vehicle-mounted device may further determine, based on status information of a driver or input information of a driver, whether a traveling abnormality happens.

It should be understood that the foregoing manner in which the vehicle-mounted device determines whether the vehicle has a traveling abnormality is merely an example, and does not constitute a limitation on the protection scope of this application.

S520: The vehicle-mounted device sends indication information to the terminal device based on the traveling abnormality that happens to the vehicle in which the vehicle-mounted device is located.

It should be noted that the indication information indicates that the vehicle-mounted device detects that the vehicle has a traveling abnormality, that is, after the terminal device receives the indication information, the terminal device can determine that the vehicle-mounted device detects that the vehicle has a traveling abnormality.

In the embodiment shown in FIG. 5, the indication information sent by the vehicle-mounted device to the terminal device is the first abnormality prompt information.

S530: The terminal device determines, based on the indication information and first traveling data of the vehicle that is detected by the terminal device, that the vehicle actually has a traveling abnormality.

It should be understood that, after receiving the indication information, the terminal device needs to perform second determining based on the indication information and the detected first traveling data, to determine whether the vehicle actually has a traveling abnormality. In the embodiment shown in FIG. 5, the terminal device determines that the vehicle actually has a traveling abnormality.

It may be understood that there are many methods for the terminal device to determine whether there is actually a traveling abnormality. The following uses an example for description.

In some embodiments, the terminal device may first preliminarily determine, based on the detected first traveling data, whether there is a traveling abnormality. If preliminarily determining that there is a traveling abnormality, the terminal device may compare time information of the traveling abnormality determined by the vehicle-mounted device and carried in the indication information with time information of the traveling abnormality preliminarily determined by the terminal device, and determine, based on whether the two traveling abnormalities are determined within a same time window, whether the vehicle has a traveling abnormality.

For example, if the two traveling abnormalities are determined within a same time window, it is determined that the vehicle actually has a traveling abnormality; or if the two traveling abnormalities are determined not within a same time window, it may be determined that the vehicle does not actually have a traveling abnormality. It may be understood that, after the two traveling abnormalities are determined not within a same time window, the terminal device may further interact with the vehicle-mounted device again, to determine whether there is a traveling abnormality in a plurality of time periods in a similar manner.

In some other embodiments, the terminal device may determine a severity of the traveling abnormality based on related information of the traveling abnormality carried in the indication information and the detected first traveling data. If the severity is greater than or equal to a preset abnormality threshold, it is determined that the vehicle actually has a traveling abnormality; or if the severity is less than the preset abnormality threshold, it is determined that the vehicle does not actually have a traveling abnormality.

In some other embodiments, the terminal device may alternatively determine a severity of traveling abnormality based on the detected first traveling data. If the severity is greater than or equal to a preset abnormality threshold, it is determined that the vehicle actually has a traveling abnormality. If the severity is less than the preset abnormality threshold, it is determined that the vehicle does not actually have a traveling abnormality.

For example, the terminal device may determine a severity based on speed information of the vehicle. For example, if the vehicle speed is greater than or equal to a preset speed threshold (for example, 50 kilometers per hour) when a traveling abnormality happens to the vehicle, the terminal device determines that a severity is greater than or equal to the preset abnormality threshold; or if the vehicle speed is less than the preset speed threshold when a traveling abnormality happens to the vehicle, the terminal device determines that a severity is less than the preset abnormality threshold. In other words, when the vehicle speed is high, a traveling abnormality is likely to cause severe damage. Therefore, it may be determined that a severity of the traveling abnormality is high. Otherwise, a severity is low.

For example, the terminal device may further determine, based on speed change information, traveling direction change information, and the like, whether the severity is greater than or equal to the preset abnormality threshold. Details are not described in this application.

S540: The terminal device makes a call for emergency rescue.

In this embodiment of this application, after determining that the vehicle actually has a traveling abnormality, the terminal device determines to make a call for emergency rescue. In some other embodiments, after determining that the vehicle does not actually have a traveling abnormality, the terminal device determines not to make a call for emergency rescue.

It should be understood that there may be a plurality of forms of calls for emergency rescue. The terminal device and the vehicle-mounted device may separately make a call for emergency rescue. Call objects of the terminal device and the vehicle-mounted device may be the same or different. The following uses an example for description.

In some embodiments, that the terminal device makes a call for emergency rescue includes: displaying call for rescue prompt information on a display, and sending prompt information of needing to make a call for rescue to the vehicle-mounted device.

For example, after the terminal device displays the call for rescue prompt information on the display, the terminal device may determine, based on a response status of a user on the call for rescue prompt information, whether to make a call for emergency rescue. For example, if response information of the user that confirms to make a call is received, or no response information of the user is received within a preset time length, a call for emergency rescue is made; or if response information of the user that confirms not to make a call for rescue is received, no call for rescue is made, that is, the traveling abnormality prompt information sent by the vehicle-mounted device is ignored. For a specific process, refer to FIG. 4 and related descriptions. Details are described herein.

It may be understood that the terminal device may make a call for emergency rescue by calling an emergency contact in the terminal device, calling police, calling for road rescue, calling an ambulance, or the like. This is not limited in this application.

S550: The terminal device sends, to the vehicle-mounted device, prompt information of needing to make a call for rescue.

It should be understood that, when determining that the vehicle actually has a traveling abnormality, the terminal device sends the prompt information of needing to make a call for rescue to the vehicle-mounted device. In other words, in the embodiment shown in FIG. 5, the second abnormality prompt information sent by the terminal device to the vehicle-mounted device is the prompt information of needing to make a call for rescue.

In some other embodiments, when determining that the vehicle does not actually have a traveling abnormality, the terminal device may send prompt information of not needing to make a call for rescue to the vehicle-mounted device, that is, the second abnormality prompt information sent by the terminal device to the vehicle-mounted device is the prompt information of not needing to make a call for rescue.

S560: The vehicle-mounted device makes a call for emergency rescue.

It may be understood that, after determining that a traveling abnormality happens to a vehicle in which the vehicle-mounted device is located, the vehicle-mounted device sends indication information to the terminal device based on the traveling abnormality that happens to the vehicle, and finally determines, based on a response status of the terminal device to the indication information, whether to make a call for emergency rescue.

In the embodiment shown in FIG. 5, the response status of the terminal device to the indication information includes: sending the prompt information of needing to make a call for rescue to the vehicle-mounted device. After receiving the prompt information of needing to make a call for rescue, the vehicle-mounted device determines to make a call for emergency rescue.

In some other embodiments, when determining that the vehicle does not actually have a traveling abnormality, the terminal device sends prompt information of not needing to make a call for rescue to the vehicle-mounted device. In this case, after receiving the prompt information of not needing to make a call for rescue, the vehicle-mounted device determines not to make a call for emergency rescue.

In some other embodiments, if the vehicle-mounted device fails to receive any response from the terminal device within a preset time length, the vehicle-mounted device determines to make a call for emergency rescue. In this implementation, no response of the terminal device within a long time may be that the terminal device is abnormal (for example, the terminal device is damaged or is thrown out of a vehicle) due to a traveling abnormality. In this case, it is determined to make a call for emergency rescue, thereby ensuring a response capability to an abnormality of the terminal device according to the car crash detection method.

It may be understood that the vehicle-mounted device may make a call for emergency rescue further by calling for road rescue or calling police, or by calling for road rescue and calling police. This is not limited in this application.

In some embodiments, that the terminal device makes a call for emergency rescue may be: calling an emergency phone number and/or an emergency contact; and that the vehicle-mounted device makes a call for emergency rescue may be: calling for road rescue and/or calling police.

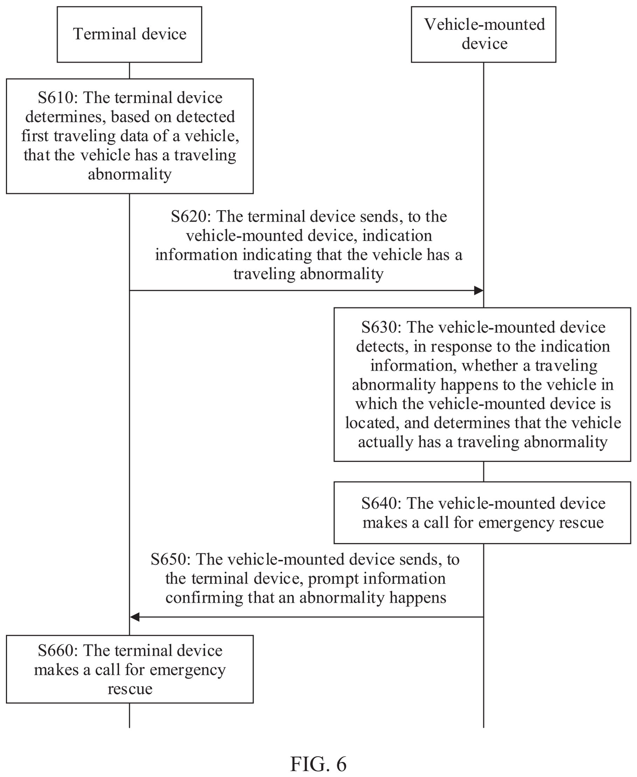

In some other example embodiments, when the terminal device fails to receive the traveling abnormality indication information sent by the vehicle-mounted device, the terminal device determines, based on the detected first traveling data of the vehicle, that the vehicle has a traveling abnormality. In this case, the terminal device actively initiates interaction with the vehicle-mounted device, to determine whether to make a call for emergency rescue. The following describes this case with reference to FIG. 6.

FIG. 6 is a schematic flowchart of an example according to an embodiment of this application. Devices in the flowchart include a vehicle-mounted device and a terminal device, and the vehicle-mounted device and the terminal device are in a same vehicle.

In the embodiment shown in FIG. 6, the terminal device first detects that a vehicle has a traveling abnormality, second abnormality prompt information sent by the terminal device to the vehicle-mounted device is indication information indicating that the terminal device detects that the vehicle has a traveling abnormality, and first abnormality prompt information sent by the vehicle-mounted device to the terminal device is a response status of the vehicle-mounted device to the indication information sent by the terminal device.

As shown in FIG. 6, the procedure includes the following steps: S610 to S660.

S610: The terminal device determines, based on detected first traveling data of the vehicle, that the vehicle has a traveling abnormality.

It should be understood that the terminal device determines, based on the detected first traveling data of the vehicle, whether the vehicle has a traveling abnormality. Specifically, the first traveling data may include a speed, positioning data, acceleration data, a movement direction, barometric pressure data, sound data, and the like. The terminal device may determine, based on one or more of the foregoing data, whether the vehicle has a traveling abnormality.

For example, if the terminal device determines one or more of the following: a sudden change of a speed of a user, a sudden change of a moving direction of the user, a change to a preset extent of barometric pressure around the user, or occurrence of a sound at a loud sound level around the user, the terminal device determines that the vehicle has a traveling abnormality (that is, a car crash happens to the terminal device user).

For example, the terminal device may obtain corresponding first traveling data based on an GPS (Global Positioning System) positioning device, an acceleration sensor, a gyroscope, a barometer, a sound sensor, and the like of the terminal device. Details are not described in this application.

S620: The terminal device sends, to the vehicle-mounted device, indication information indicating that the vehicle has a traveling abnormality.

In the embodiment shown in FIG. 6, the terminal device determines that the vehicle has a traveling abnormality. Therefore, the terminal device sends the traveling abnormality indication information to the vehicle-mounted device. In other words, in the embodiment shown in FIG. 6, the second abnormality prompt information sent by the terminal device to the vehicle-mounted device is the indication information indicating that the vehicle has a traveling abnormality.

In some other embodiments, when failing to detect a traveling abnormality, the terminal device may send normal traveling prompt information to the vehicle-mounted device.

For example, when determining that the vehicle has a traveling abnormality, the terminal device may also determine whether a severity of the traveling abnormality is greater than or equal to a preset abnormality threshold. When determining that the severity is greater than or equal to the preset abnormality threshold, the terminal device determines that the vehicle has a traveling abnormality, and then sends the traveling abnormality indication information to the vehicle-mounted device.

S630: The vehicle-mounted device detects, in response to the indication information, whether a traveling abnormality happens to the vehicle in which the vehicle-mounted device is located, and determines that the vehicle actually has a traveling abnormality.

It may be understood that, after sending the indication information to the vehicle-mounted device, the terminal device determines, based on a response status of the vehicle-mounted device to the indication information, whether to make a call for emergency rescue.

It should be understood that the vehicle-mounted device detects, in response to the indication information sent by the terminal device, whether a traveling abnormality happens to the vehicle in which the vehicle-mounted device is located, to obtain a detection result. The vehicle-mounted device determines, based on the detection result, whether the vehicle actually has a traveling abnormality, that is, the detection result is a final result of whether the vehicle actually has a traveling abnormality.

In the embodiment shown in FIG. 6, the detection result is that the vehicle-mounted device determines that the vehicle has a traveling abnormality, that is, the vehicle-mounted device determines that the vehicle in which the vehicle-mounted device is located actually has a traveling abnormality.

It may be understood that, for a specific manner in which the vehicle-mounted device detects whether a traveling abnormality happens to the vehicle in which the vehicle-mounted device is located, to obtain the detection result, refer to the description of the manner in which the vehicle-mounted device determines whether the vehicle has an abnormality in step S510. Details are not described herein.

It should be understood that, when the vehicle-mounted device determines that the vehicle in which the vehicle-mounted device is located actually has a traveling abnormality, a response of the vehicle-mounted device to the indication information may be "confirming that an abnormality happens" or "confirming that the vehicle has a traveling abnormality". When the vehicle-mounted device determines that the vehicle in which the vehicle-mounted device is located does not actually have a traveling abnormality, a response of the vehicle-mounted device to the indication information may be "confirming that no abnormality happens", "confirming that the vehicle does not have a traveling abnormality", or the like. Details are not described in this application.

In some other embodiments, the vehicle-mounted device may be faulty, and cannot respond to the terminal device with any information. Details are not described in this application.

S640: The vehicle-mounted device makes a call for emergency rescue.

In the embodiment shown in FIG. 6, the vehicle-mounted device determines, in response to the indication information sent by the terminal device, that the vehicle actually has a traveling abnormality. In this case, the vehicle-mounted device makes a call for emergency rescue.

For example, a manner in which the vehicle-mounted device makes a call for emergency rescue may include: calling for road rescue, or calling police, or calling for road rescue and calling police.

In some embodiments, a manner in which the vehicle-mounted device makes a call for emergency rescue may include: calling an emergency contact, or calling an ambulance, or calling the fire department. No enumeration is provided herein.

In some other embodiments, the vehicle-mounted device determines, in response to the indication information sent by the terminal device, that the vehicle does not actually have a traveling abnormality. In this case, the vehicle-mounted device ignores the indication information of the terminal device, and does not make a call for emergency rescue.

S650: The vehicle-mounted device sends, to the terminal device, prompt information confirming that an abnormality happens.

In the embodiment shown in FIG. 6, the vehicle-mounted device determines, in response to the indication information sent by the terminal device, that the vehicle actually has a traveling abnormality, and the vehicle-mounted device sends, to the terminal device, prompt information confirming that an abnormality happens. In other words, in the embodiment shown in FIG. 6, the first abnormality prompt information sent by the vehicle-mounted device to the terminal device is the prompt information confirming that an abnormality happens.

In some other embodiments, the vehicle-mounted device determines, in response to the indication information sent by the terminal device, that the vehicle does not actually have a traveling abnormality. In this case, the vehicle-mounted device sends, to the terminal device, prompt information confirming that no abnormality happens, that is, the first abnormality prompt information sent by the vehicle-mounted device to the terminal device is the prompt information confirming that no abnormality happens.

S660: The terminal device makes a call for emergency rescue.

It may be understood that the terminal device may make a call for emergency rescue by calling an emergency contact in the terminal device, calling police, calling for road rescue, calling an ambulance, or the like. This is not limited in this application.

For example, that the terminal device makes a call for emergency rescue includes: The terminal device displays call for rescue prompt information on a display.

For example, after the terminal device displays the call for rescue prompt information on the display, the terminal device may determine, based on a response status of a user on the call for rescue prompt information, whether to make a call for emergency rescue. For example, if response information of the user that confirms to make a call is received, or no response information of the user is received within a preset time length, a call for emergency rescue is made; or if response information of the user that confirms not to make a call is received, no call for rescue is made, that is, the traveling abnormality prompt information sent by the vehicle-mounted device is ignored. For a specific process, refer to FIG. 4 and related descriptions. Details are described herein.

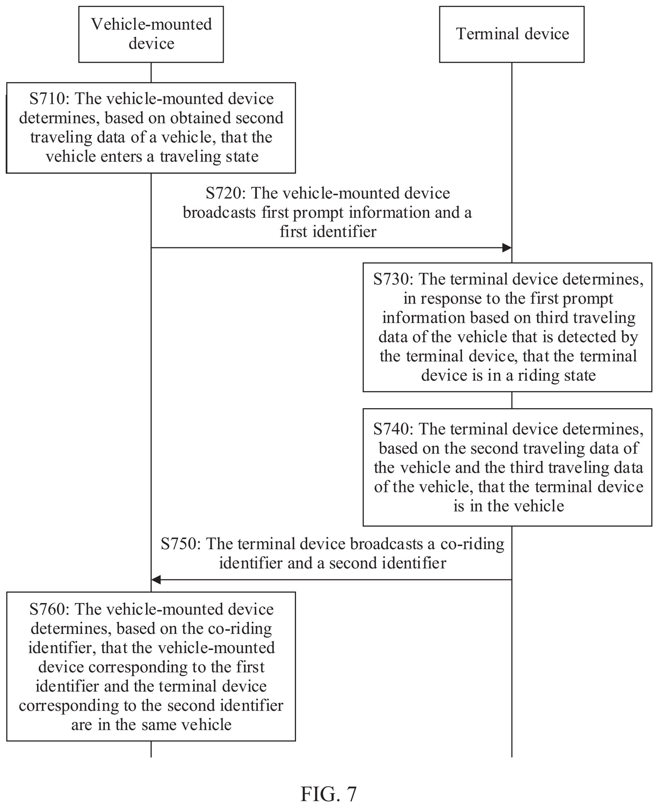

For ease of understanding, the following uses an example to describe a process of co-riding determining through message broadcasting in embodiments of this application. FIG. 7 is a schematic flowchart of determining that a vehicle-mounted device and a terminal device are in a same vehicle in a car crash detection method according to an embodiment of this application. As shown in FIG. 7, the procedure includes the following steps: S710 to S760.

S710: The vehicle-mounted device determines, based on obtained second traveling data of a vehicle, that the vehicle enters a traveling state.

It should be understood that the vehicle-mounted device obtains the second traveling data of the vehicle from the vehicle, to determine whether the vehicle enters the traveling state.

For example, after the vehicle is started, when a speed of the vehicle is greater than or equal to a preset speed threshold, it is determined that the vehicle enters the traveling state. For example, if the speed of the vehicle is greater than or equal to 25 kilometers per hour, it may be determined that the vehicle enters the traveling state. The preset speed threshold may be set as required. Details are not described herein.

S720: The vehicle-mounted device broadcasts first prompt information and a first identifier.

The first prompt information prompts that the vehicle enters the traveling state, the first prompt information includes the second traveling data of the vehicle, and the first identifier is a unique identifier of the vehicle-mounted device.

For example, when broadcasting the first prompt information and the first identifier, the vehicle-mounted device may request a response of the terminal device that receives the broadcast.

For example, in addition to the first prompt information and the first identifier, the broadcast information sent by the vehicle-mounted device may further include state information and moment information of the vehicle-mounted device when the vehicle-mounted device enters the traveling state.

S730: The terminal device determines, in response to the first prompt information based on third traveling data of the vehicle that is detected by the terminal device, that the terminal device is in a riding state.

It should be understood that after receiving the broadcast information of the vehicle-mounted device, the terminal device obtains the third traveling data of the vehicle, and determines, based on the third traveling data, that the terminal device is in the riding state. The riding state may indicate that a moving speed of the terminal device is greater than or equal to a specific threshold, and a moving direction complies with a specific rule.

For example, the terminal device may determine, based on speed information in the third traveling data, whether to enter the riding state. When the speed is greater than or equal to the preset threshold, the terminal device determines to enter the riding state; or if the speed is less than the preset threshold, the terminal device determines not to enter the riding state.

In the embodiment shown in FIG. 7, the terminal device determines that the terminal device is in the riding state.

In some other embodiments, the terminal device may alternatively determine that the terminal device does not enter the riding state. When determining that the terminal device does not enter the riding state, the terminal device ignores the first prompt information and the first identifier that are broadcast by the vehicle-mounted device.

S740: The terminal device determines, based on the second traveling data of the vehicle and the third traveling data of the vehicle, that the terminal device is in the vehicle.

It should be understood that after the terminal device determines that the terminal device enters the riding state, the terminal device determines, based on the second traveling data of the vehicle and the third traveling data of the vehicle, whether the terminal device is in the vehicle in which the vehicle-mounted device is located.

For example, the second traveling data may include one or more of the vehicle speed and geographical location change information.

For example, the terminal device may determine, by matching a vehicle speed in the second traveling data with a vehicle speed in the third traveling data of the vehicle, whether the terminal device is in the vehicle in which the vehicle-mounted device is located; or the terminal device may determine, by matching geographical location change information in the second traveling data with geographical location change information in the third traveling data of the vehicle, whether the terminal device is in the vehicle in which the vehicle-mounted device is located. Certainly, the terminal device may alternatively determine, by matching both the speeds and the geographical location change information, whether the terminal device is in the vehicle in which the vehicle-mounted device is located.

For example, the terminal device may determine, by matching the vehicle speeds within a preset time length, whether the terminal device is in the vehicle in which the vehicle-mounted device is located. If the vehicle speeds can match within the preset time length (that is, the vehicle speeds are the same or similar), it is determined that the terminal device is in the vehicle in which the vehicle-mounted device is located. Otherwise, it is determined that the terminal device is not in the vehicle in which the vehicle-mounted device is located.

For another example, a first change trend of a geographical location of the vehicle-mounted device may be determined based on the geographical location change information in the second traveling data, and a second change trend of the geographical location of the terminal device may be determined based on the geographical location change information in the third traveling data. Then, a similarity between the first change trend and the second change trend is determined. If the similarity is greater than or equal to a specific threshold, it is determined that the terminal device is in the vehicle in which the vehicle-mounted device is located. Otherwise, it is determined that the terminal device is not in the vehicle in which the vehicle-mounted device is located.

It should be understood that after determining that the terminal device and the vehicle-mounted device are in the same vehicle, the terminal device records the first identifier of the vehicle-mounted device, to facilitate subsequent interaction.

S750: The terminal device broadcasts a co-riding identifier and a second identifier.

The co-riding identifier represents that the vehicle-mounted device corresponding to the first identifier and the terminal device corresponding to the second identifier are in the same vehicle, and the second identifier is a unique identifier of the terminal device.

For example, the co-riding identifier may include the identifiers of the two devices (namely, the first identifier and the second identifier) and a co-riding mark. The co-riding identifier represents that the two devices respectively corresponding to the two device identifiers are in the same vehicle.

In the embodiment shown in FIG. 7, the terminal device determines that the terminal device is in the vehicle in which the vehicle-mounted device is located. In this case, the terminal device broadcasts the co-riding identifier and the second identifier.

In another embodiment, the terminal device determines that the terminal device is not in the vehicle in which the vehicle-mounted device is located. In this case, the terminal device may not respond.

S760: The vehicle-mounted device determines, based on the co-riding identifier, that the vehicle-mounted device corresponding to the first identifier and the terminal device corresponding to the second identifier are in the same vehicle.

It should be understood that after receiving the co-riding identifier, the vehicle-mounted device determines that the vehicle-mounted device and the terminal device are co-riding. Therefore, the vehicle-mounted device records the second identifier of the terminal device, to facilitate subsequent interaction.

In this embodiment of this application, the terminal device determines whether the terminal device and the vehicle-mounted device that are in the vehicle are co-riding. The first prompt information includes the second traveling data of the vehicle. After the terminal device determines that the terminal device is in the riding state, it may be directly determined, based on the second traveling data of the vehicle and the third traveling data of the vehicle, whether the terminal device and the vehicle-mounted device are co-riding according to a short method procedure. In addition, the first identifier of the terminal device is used to identify the terminal device, and the second identifier is used to identify the vehicle-mounted device, so that the vehicle-mounted device and the terminal device interact without requiring the terminal device to provide privacy information such as a mobile phone number, thereby ensuring privacy security of the terminal device.

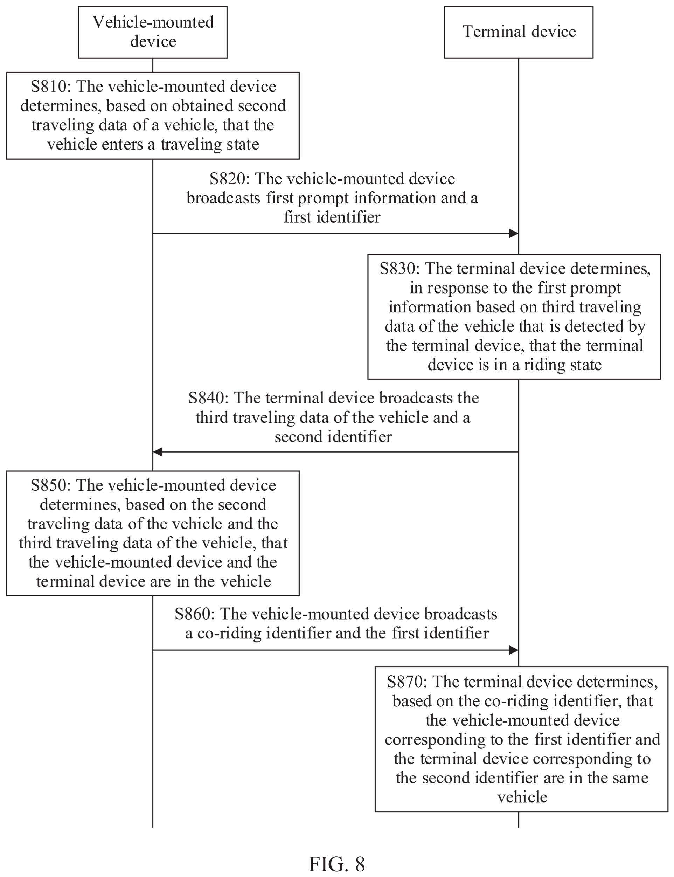

For ease of understanding, the following uses an example to describe a process of co-riding determining through message broadcasting in embodiments of this application. FIG. 8 is a schematic flowchart of determining that a vehicle-mounted device and a terminal device are in a same vehicle in a car crash detection method according to an embodiment of this application. As shown in FIG. 8, the procedure includes the following steps: S810 to S870.

S810: The vehicle-mounted device determines, based on obtained second traveling data of a vehicle, that the vehicle enters a traveling state.

It should be understood that the vehicle-mounted device obtains the second traveling data of the vehicle from the vehicle, to determine whether the vehicle enters the traveling state.

For example, after the vehicle is started, when a speed of the vehicle is greater than or equal to a preset speed threshold, it is determined that the vehicle enters the traveling state. The preset speed threshold may be set as required. For example, if the speed of the vehicle is greater than or equal to 25 kilometers per hour, it may be determined that the vehicle enters the traveling state. Details are not described herein.

S820: The vehicle-mounted device broadcasts first prompt information and a first identifier.

The first prompt information prompts that the vehicle enters the traveling state, and the first identifier is a unique identifier of the vehicle-mounted device.

For example, when broadcasting the first prompt information, the vehicle-mounted device may request the terminal device that receives the broadcast to respond.

For example, in addition to the first prompt information, the broadcast information sent by the vehicle-mounted device may further include state information and moment information of the vehicle-mounted device when the vehicle-mounted device enters the traveling state.

S830: The terminal device determines, in response to the first prompt information based on third traveling data of the vehicle that is detected by the terminal device, that the terminal device is in a riding state.

It should be understood that after receiving the broadcast information of the vehicle-mounted device, the terminal device obtains the third traveling data of the vehicle, and determines, based on the third traveling data, that the terminal device is in the riding state. The riding state indicates that a moving speed of the terminal device is greater than or equal to a specific threshold, and a moving direction complies with a specific rule.

For example, the terminal device may determine, based on speed information in the third traveling data, whether to enter the riding state. When the speed is greater than or equal to the preset threshold, the terminal device determines to enter the riding state; or if the speed is less than the preset threshold, the terminal device determines not to enter the riding state.

In the embodiment shown in FIG. 7, the terminal device determines that the terminal device is in the riding state.

In some other embodiments, the terminal device may alternatively determine that the terminal device does not enter the riding state. When determining that the terminal device does not enter the riding state, the terminal device ignores the first prompt information and the first identifier that are broadcast by the vehicle-mounted device.

S840: The terminal device broadcasts the third traveling data of the vehicle and a second identifier.

The third traveling data of the vehicle is detected by the terminal device, and the second identifier is a unique identifier of the terminal device.

It should be understood that when the terminal device determines that the terminal device is in the riding state, the terminal device broadcasts the third traveling data of the vehicle and the second identifier.

In some other embodiments, when determining that the terminal device is not in the riding state, the terminal device ignores the first prompt information and the first identifier.

S850: The vehicle-mounted device determines, based on the second traveling data of the vehicle and the third traveling data of the vehicle, that the vehicle-mounted device and the terminal device are in the vehicle.

For example, the second traveling data may include one or more of the vehicle speed and geographical location change information, to determine whether the terminal device is in the vehicle in which the vehicle-mounted device is located.

For example, the vehicle-mounted device may determine, by matching a vehicle speed in the second traveling data with a vehicle speed in the third traveling data of the vehicle, whether the terminal device is in the vehicle in which the vehicle-mounted device is located; or the vehicle-mounted device may determine, by matching geographical location change information in the second traveling data with geographical location change information in the third traveling data of the vehicle, whether the terminal device is in the vehicle in which the vehicle-mounted device is located. Certainly, the vehicle-mounted device may alternatively determine, by matching both the speeds and the geographical location change information, whether the terminal device is in the vehicle in which the vehicle-mounted device is located.

For example, the vehicle-mounted device may determine, by matching the vehicle speeds within a preset time length, whether the terminal device is in the vehicle in which the vehicle-mounted device is located. If the vehicle speeds can match within the preset time length (that is, the vehicle speeds are the same or similar), it is determined that the terminal device is in the vehicle in which the vehicle-mounted device is located. Otherwise, it is determined that the terminal device is not in the vehicle in which the vehicle-mounted device is located.

For another example, a first change trend of a geographical location of the vehicle-mounted device may be determined based on the geographical location change information in the second traveling data, and a second change trend of the geographical location of the terminal device may be determined based on the geographical location change information in the third traveling data. Then, a similarity between the first change trend and the second change trend is determined. If the similarity is greater than or equal to a specific threshold, it is determined that the terminal device is in the vehicle in which the vehicle-mounted device is located. Otherwise, it is determined that the terminal device is not in the vehicle in which the vehicle-mounted device is located.

It should be understood that after determining that the terminal device and the vehicle-mounted device are in the same vehicle, the vehicle-mounted device records the second identifier of the terminal device, to facilitate subsequent interaction.

S860: The vehicle-mounted device broadcasts a co-riding identifier and the first identifier.

The co-riding identifier represents that the vehicle-mounted device corresponding to the first identifier and the terminal device corresponding to the second identifier are in the same vehicle.

In the embodiment shown in FIG. 8, the vehicle-mounted device determines that the vehicle-mounted device and the terminal device are in the same vehicle. In this case, the vehicle-mounted device broadcasts the co-riding identifier and the first identifier.

In some other embodiments, the vehicle-mounted device determines that the vehicle-mounted device and the terminal device are located in the same vehicle. In this case, the vehicle-mounted device continues to broadcast the first prompt information and the first identifier.

S870: The terminal device determines, based on the co-riding identifier, that the vehicle-mounted device corresponding to the first identifier and the terminal device corresponding to the second identifier are in the same vehicle.

It should be understood that after receiving the co-riding identifier, the terminal device determines that the terminal device and the vehicle-mounted device are in the same vehicle, and the terminal device records the first identifier of the vehicle-mounted device, to facilitate subsequent interaction.

It may be understood that the vehicle-mounted device and the terminal device interact with each other through message broadcasting, for example, BLE broadcasting. Table 1 shows a packet format of message broadcasting.

**Table 1**

| | Length | Random device identifier | Signal-to-noise ratio | Time and geographical location of entering a driving mode | Current speed and GPS geographical location | Device type | Responding to a broadcast request or exiting the driving mode | Co-riding confirmation identifier |
|---|---|---|---|---|---|---|---|---|
| Packet identifier | | A | B | C | D | E | F | G |

In Table 1:
Length indicates a packet length.

Random device identifier A is randomly generated device code.

Signal-to-noise ratio B is signal-to-noise ratio of a broadcast signal received by the terminal device from the vehicle-mounted device, or signal-to-noise ratio of a broadcast signal received by the vehicle-mounted device from the terminal device.

Entering the driving mode C includes a time and a corresponding geographical location at which the head unit or the terminal enters the driving mode.

Current vehicle speed and geographical location D is a current vehicle speed and GPS location fed back by the terminal device after the vehicle-mounted device sends a response request, or a current vehicle speed and GPS location fed back by the vehicle-mounted device after the terminal device sends a response request.

Device type E is a device type, for example, a vehicle-mounted device or a terminal.

Responding to a broadcast request or a driving mode exit request F indicates that the terminal device responds to a broadcast based on a request of the vehicle-mounted device, or the vehicle-mounted device responds to a broadcast based on a request of the terminal device.

Co-riding confirmation identifier G is an identifier sent by the vehicle-mounted device or the terminal device to confirm co-riding.

In some embodiments, broadcast interaction between the vehicle-mounted device and the terminal device is as follows:
(1) Start the vehicle-mounted device: When a vehicle speed of the vehicle in which the vehicle-mounted device is located reaches a threshold (for example, greater than or equal to 25 km/h), or safety belt identification of the vehicle starts, the vehicle-mounted device enters the driving mode (or may be referred to as a traveling state); and the vehicle-mounted device sends a Bluetooth broadcast for entering the driving mode.
(2) The vehicle-mounted device broadcasts the state: When the vehicle-mounted device is started, the vehicle-mounted device broadcasts a time and a geographical location (C) at which the vehicle-mounted device enters the driving mode, and then requests the terminal device to respond (F).
(3) The terminal device responds to the broadcast: The terminal device receives the broadcast request of the vehicle-mounted device, observes a movement and a geographical location change at this moment, randomly generates an identifier (A), and as a response, feeds back received signal-to-noise ratio (C), a device type (E), and a current status (D).
(4) Synchronization confirmation: The terminal device continuously feeds back its own states for a plurality of times (for example, three to five times). After receiving the states, the vehicle-mounted device compares the signal-to-noise ratios of signals of the plurality of times, and finds that the signal-to-noise ratios are basically consistent (B), and compares speeds and GPS signal changes with driving states of the vehicle-mounted device, and finds that the speeds and the GPS signal changes and the driving states of the vehicle-mounted device are consistent (D). In this case, the vehicle-mounted device determines that the vehicle-mounted device and the terminal device are co-riding. Therefore, the vehicle-mounted device and the terminal device determine based on the co-riding confirmation identifier that the vehicle-mounted device and the terminal device are co-riding.
(5) The trip ends: The vehicle is turned off or the vehicle-mounted device is completely shut down. In this case, the vehicle-mounted device sends a driving mode exit request (F).

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing procedures (method embodiments) may not be necessary, or some new steps may be added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

In embodiments, functional modules of each device (including the foregoing terminal device or vehicle-mounted device) may be divided according to the foregoing method embodiments. For example, each functional module may be obtained through division based on each corresponding function, or two or more functions may be integrated into one processing module. The integrated module may be implemented in a form of hardware. It should be noted that module division in embodiments is an example and is merely logical function division. During actual implementation, there may be another division manner.

It should be noted that related content of the steps in the foregoing method embodiments may be referenced to function descriptions of corresponding functional modules, and details are not described herein again.

The terminal device or the vehicle-mounted device provided in embodiments of this application is configured to perform the procedure provided in any one of the foregoing embodiments, and therefore can achieve same effect as the foregoing implementations. When an integrated unit is used, the terminal device may include a processing module, a storage module, and a communication module. The processing module may be configured to control and manage an action of the terminal device. For example, the processing module may be configured to support the terminal device in performing steps performed by a processing unit. The storage module may be configured to support storage of program code, data, and the like. The communication module may be configured to support communication between the terminal device and another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another terminal device.

An embodiment of this application provides a terminal device. The terminal device is configured to perform steps performed by the terminal device in the car crash detection method provided in this application. For example, the terminal device in this embodiment of this application may be any terminal device in the foregoing embodiments. The terminal device in this embodiment of this application may be a handheld device (for example, a mobile phone), various portable laptops, various tablet computers, a smart camera, a wearable device, or the like. This is not limited in this embodiment of this application.

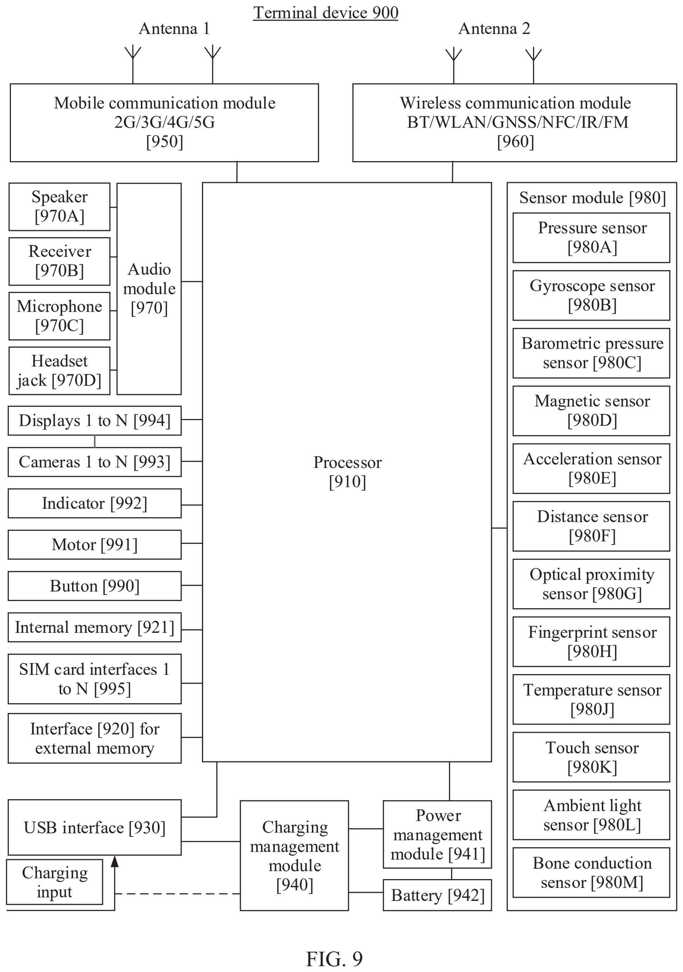

For example, FIG. 9 is a diagram of a structure of a terminal device 900. The terminal device 900 may include a processor 910, an interface 920 for external memory, an internal memory 921, a universal serial bus (universal serial bus, USB) interface 930, a charging management module 940, a power management module 941, a battery 942, an antenna 1, an antenna 2, a mobile communication module 950, a wireless communication module 960, an audio module 970, a speaker 970A, a receiver 970B, a microphone 970C, a headset jack 970D, a sensor module 980, a button 990, a motor 991, an indicator 992, a camera 993, a display 994, a subscriber identification module (subscriber identification module, SIM) card interface 995, and the like. The sensor module 980 may include a pressure sensor 980A, a gyroscope sensor 980B, a barometric pressure sensor 980C, a magnetic sensor 980D, an acceleration sensor 980E, a distance sensor 980F, an optical proximity sensor 980G, a fingerprint sensor 980H, a temperature sensor 980J, a touch sensor 980K, an ambient light sensor 980L, a bone conduction sensor 980M, and the like.

It may be understood that the structure shown in embodiments of this application does not constitute a specific limitation on the terminal device 900. In some other embodiments of this application, the terminal device 900 may include more or fewer components than those shown in the figure, or some components may be combined, or some components may be split, or a different component arrangement may be used. The components shown in the figure may be implemented by hardware, software, or a combination of software and hardware.

The processor 910 may include one or more processing units. For example, the processor 910 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 900. The controller may generate an operation control signal based on an instruction operation code and a time sequence signal, to complete control of instruction reading and instruction execution.

A memory may be further disposed in the processor 910, and is configured to store instructions and data. In some embodiments, the memory in the processor 910 is a cache. The memory may store instructions or data just used or cyclically used by the processor 910. If the processor 910 needs to use the instructions or the data again, the processor may directly invoke the instructions or the data from the memory. This avoids repeated access and reduces waiting time of the processor 910, thereby improving system efficiency.

In some embodiments, the processor 910 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 910 may include a plurality of groups of I2C buses. The processor 910 may be separately coupled to the touch sensor 980K, a charger, a flash, the camera 993, and the like through different I2C bus interfaces. For example, the processor 910 may be coupled to the touch sensor 980K through the I2C interface, so that the processor 910 communicates with the touch sensor 980K through the I2C bus interface, to implement a touch function of the terminal device 900.

The I2S interface may be configured to perform audio communication. In some embodiments, the processor 910 may include a plurality of groups of I2S buses. The processor 910 may be coupled to the audio module 970 through the I2S bus, to implement communication between the processor 910 and the audio module 970. In some embodiments, the audio module 970 may transmit an audio signal to the wireless communication module 960 through the I2S interface, to implement a function of answering a call through a Bluetooth headset.

The PCM interface may also be used to perform audio communication, and sample, quantize, and code an analog signal. In some embodiments, the audio module 970 may be coupled to the wireless communication module 960 through a PCM bus interface. In some embodiments, the audio module 970 may also transmit an audio signal to the wireless communication module 960 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 910 to the wireless communication module 960. For example, the processor 910 communicates with a Bluetooth module in the wireless communication module 960 through the UART interface, to implement a Bluetooth function. In some embodiments, the audio module 970 may transmit an audio signal to the wireless communication module 960 through the UART interface, to implement a function of playing music through the Bluetooth headset.

The MIPI interface may be configured to connect the processor 910 to a peripheral device like the display 994 or the camera 993. The MIPI interface includes a camera serial interface (camera serial interface, CSI), a display serial interface (display serial interface, DSI), and the like. In some embodiments, the processor 910 communicates with the camera 993 through the CSI interface, to implement an image shooting function of the terminal device 900. The processor 910 communicates with the display 994 through the DSI interface, to implement a display function of the terminal device 900.

The GPIO interface may be configured by software. The GPIO interface may be configured as a control signal or a data signal. In some embodiments, the GPIO interface may be configured to connect the processor 910 to the camera 993, the display 994, the wireless communication module 960, the audio module 970, the sensor module 980, or the like. The GPIO interface may alternatively be configured as an I2C interface, an I2S interface, a UART interface, an MIPI interface, or the like.

The USB interface 930 is an interface that complies with a USB standard specification, and may be specifically a mini USB interface, a micro USB interface, a USB Type-C interface, or the like. The USB interface 930 may be configured to connect to a charger to charge the terminal device 900, or may be used to transmit data between the terminal device 900 and a peripheral device, or may be configured to connect to a headset for playing audio through the headset. The interface may alternatively be configured to connect to another terminal device, for example, an AR device.

It can be understood that an interface connection relationship between the modules shown in this embodiment of this application is merely an example for description, and does not constitute a limitation on the structure of the terminal device 900. In some other embodiments of this application, the terminal device 900 may alternatively use an interface connection mode different from that in the foregoing embodiment, or use a combination of a plurality of interface connection modes.

The charging management module 940 is configured to receive a charging input from a charger. The charger may be a wireless charger or a wired charger. In some embodiments of wired charging, the charging management module 940 may receive a charging input of a wired charger through the USB interface 930. In some embodiments of wireless charging, the charging management module 940 may receive a wireless charging input through a wireless charging coil of the terminal device 900. When charging the battery 942, the charging management module 940 may further supply power to the terminal device through the power management module 941.

The power management module 941 is configured to connect to the battery 942, the charging management module 940, and the processor 910. The power management module 941 receives input of the battery 942 and/or the charging management module 940, to supply power to the processor 910, the internal memory 921, an external memory, the display 994, the camera 993, the wireless communication module 960, and the like. The power management module 941 may be further configured to monitor parameters such as a battery capacity, a battery cycle count, and a battery health status (electric leakage or impedance). In some other embodiments, the power management module 941 may alternatively be disposed in the processor 910, or may alternatively be disposed in a same device.

A wireless communication function of the terminal device 900 may be implemented through the antenna 1, the antenna 2, the mobile communication module 950, the wireless communication module 960, the modem processor, the baseband processor, and the like.

The antenna 1 and the antenna 2 are configured to transmit and receive an electromagnetic wave signal. Each antenna in the terminal device 900 may be configured to cover one or more communication frequency bands. Different antennas may also be reused to improve antenna utilization. For example, the antenna 1 may be reused as a diversity antenna of a wireless local area network. In some other embodiments, the antenna may be used in combination with a tuning switch.

The mobile communication module 950 may provide a solution that is applied to the terminal device 900 and that includes wireless communication such as 2G/3G/4G/5G. The mobile communication module 950 may include at least one filter, a switch, a power amplifier, a low noise amplifier (low noise amplifier, LNA), and the like. The mobile communication module 950 may receive an electromagnetic wave through the antenna 1, perform processing such as filtering and amplification on the received electromagnetic wave, and transmit the electromagnetic wave to the modem processor for demodulation. The mobile communication module 950 may further amplify a signal modulated by the modem processor, and convert the signal into an electromagnetic wave for radiation through the antenna 1. In some embodiments, at least a part of functional modules of the mobile communication module 950 may be disposed in the processor 910. In some embodiments, at least a part of functional modules of the mobile communication module 950 and at least a part of modules of the processor 910 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 970A, the receiver 970B, or the like), or displays an image or a video through the display 994. In some embodiments, the modem processor may be an independent component. In some other embodiments, the modem processor may be independent of the processor 910, and is disposed in the same device with the mobile communication module 950 or another functional module.

The wireless communication module 960 may provide a wireless communication solution that is applied to the terminal device 900 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 960 may be one or more components integrating at least one communication processing module. The wireless communication module 960 receives an electromagnetic wave through the antenna 2, performs frequency modulation and filtering processing on an electromagnetic wave signal, and sends a processed signal to the processor 910. The wireless communication module 960 may further receive a to-be-sent signal from the processor 910, perform frequency modulation and amplification on the signal, and convert the signal into an electromagnetic wave for radiation through the antenna 2.

In some embodiments, the antenna 1 and the mobile communication module 950 in the terminal device 900 are coupled, and the antenna 2 and the wireless communication module 960 in the terminal device 900 are coupled, so that the terminal device 900 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

For example, the terminal device 900 may determine a current location based on GPS data. When it is detected, based on the GPS data, that a location change greatly exceeds an expectation, a vehicle in which the terminal device is located may suddenly travel out of a lane. Therefore, it may also be considered based on this that a car crash is detected.

The terminal device 900 implements a display function by using the GPU, the display 994, the application processor, and the like. The GPU is an image processing microprocessor, and is connected to the display 994 and the application processor. The GPU is configured to: perform mathematical and geometric computation, and render an image. The processor 910 may include one or more GPUs, which execute program instructions to generate or change display information.

The display 994 is configured to display an image, a video, and the like. The display 994 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), and the like. In some embodiments, the terminal device 900 may include one or N displays 994, where N is a positive integer greater than 1.

The terminal device 900 may implement the image shooting function by using the ISP, the camera 993, the video codec, the GPU, the display 994, the application processor, and the like.

The ISP is configured to process data fed back by the camera 993. For example, during photographing, a shutter is pressed, light is transmitted to a camera photosensitive element (that is, an image sensor) through a lens, an optical signal is converted into an electrical signal, and the camera photosensitive element (that is, an image sensor) transmits the electrical signal to an ISP for processing, to convert the electrical signal into an image visible to naked eyes. The ISP may further perform algorithm optimization on noise, brightness, and complexion of the image. The ISP may further optimize parameters such as exposure and a color temperature of an image shooting scenario. In some embodiments, the ISP may be disposed in the camera 993.

The camera 993 is configured to capture a static image or a video. An optical image of an object is generated through the lens, and projected onto the photosensitive element (that is, the image sensor). The photosensitive element (that is, the image sensor) may be a charge-coupled device (charge coupled device, CCD) or a complementary metal-oxide-semiconductor (complementary metal-oxide-semiconductor, CMOS) photoelectric transistor. The photosensitive element (that is, the image sensor) converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the terminal device 900 may include one or N cameras 993, where N is a positive integer greater than 1.

The digital signal processor is configured to process a digital signal, and may process another digital signal in addition to the digital image signal. For example, when the terminal device 900 selects a frequency, the digital signal processor is configured to perform Fourier transform on frequency energy.

The video codec is configured to compress or decompress a digital video. The terminal device 900 may support one or more video codecs. Therefore, the terminal device 900 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a mode of transmission between human brain neurons, and may further continuously perform self-learning. Applications such as intelligent cognition of the terminal device 900, for example, image recognition, facial recognition, speech recognition, and text understanding, may be implemented via the NPU.

The interface 920 for external memory may be configured to connect to an external memory card, for example, a micro SD card, to extend a storage capability of the electronic device 900. The external memory card communicates with the processor 910 through the interface 920 for external memory, to implement a data storage function. For example, files such as music and videos are stored in the external memory card.

The internal memory 921 may be configured to store computer-executable program code, and the executable program code includes instructions. The processor 910 runs the instructions stored in the internal memory 921 to perform various function applications of the terminal device 900 and data processing. The internal memory 921 may include a program storage area and a data storage area. The program storage area may store an operating system, an application required by at least one function (for example, a voice playing function or an image playing function), and the like. The data storage area may store data (for example, audio data or an address book) created in a process of using the terminal device 900, and the like. In addition, the internal memory 921 may include a high-speed random access memory, or may include a nonvolatile memory such as at least one magnetic disk storage device, a flash memory, or a universal flash storage (universal flash storage, UFS).

The terminal device 900 may implement an audio function via the audio module 970, the speaker 970A, the receiver 970B, the microphone 970C, the headset jack 970D, the application processor, and the like.

The audio module 970 is configured to convert digital audio information into an analog audio signal for output, and is also configured to convert analog audio input into a digital audio signal. The audio module 970 may be further configured to encode and decode an audio signal. In some embodiments, the audio module 970 may be disposed in the processor 910, or a part of functional modules of the audio module 970 may be disposed in the processor 910.

The speaker 970A, also referred to as a "loudspeaker", is configured to convert an electrical audio signal into a sound signal. The terminal device 900 may be configured to listen to music or answer a call in a hands-free mode via the speaker 970A.

The receiver 970B, also referred to as an "earpiece", is configured to convert an electrical audio signal into a sound signal. When a call is answered or a voice message is listened to by using the terminal device 900, the receiver 970B may be put close to a human ear to listen to a voice.

The microphone 970C, also referred to as a "mike" or a "mic", is configured to convert a sound signal into an electrical signal. When making a call or sending speech information, a user may place the mouth of the user near the microphone 970C to make a sound, to input a sound signal to the microphone 970C. At least one microphone 970C may be disposed in the terminal device 900. In some other embodiments, two microphones 970C may be disposed in the terminal device 900, to collect a sound signal and implement a noise reduction function. In some other embodiments, three, four, or more microphones 970C may alternatively be disposed in the terminal device 900, to collect a sound signal, implement noise reduction, identify a sound source, implement a directional recording function, and the like.

For example, the microphone 970C can detect a sound, which can be used as an indicator indicating that a car crash happens. For example, when the microphone 970C in the terminal device detects that a sound louder than a specific sound level occurs around the terminal device, a severe collision may happen to the vehicle in which the terminal device is located and cause the sound. Therefore, it may be determined that a car crash happens.

The headset jack 970D is configured to connect to a wired headset. The headset jack 970D may be a USB interface 930, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 980A is configured to sense a pressure signal, and can convert the pressure signal into an electrical signal. In some embodiments, the pressure sensor 980A may be disposed on the display 994. There are a plurality of types of pressure sensors 980A, such as a resistive pressure sensor, an inductive pressure sensor, and a capacitive pressure sensor. The capacitive pressure sensor may include at least two parallel plates made of conductive materials. When a force is applied to the pressure sensor 980A, capacitance between electrodes changes. The terminal device 900 determines pressure intensity based on a capacitance change. When a touch operation is performed on the display 994, the terminal device 900 detects intensity of the touch operation via the pressure sensor 980A. The terminal device 900 may also calculate a touch position based on a detection signal of the pressure sensor 980A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 980B may be configured to determine a motion attitude of the terminal device 900. In some embodiments, angular velocities of the terminal device 900 around three axes (namely, x, y, and z axes) may be determined by using the gyroscope sensor 980B. The gyroscope sensor 980B may be configured to implement image stabilization during image shooting. For example, when the shutter is pressed, the gyroscope sensor 980B detects an angle at which the terminal device 900 jitters, calculates, based on the angle, a distance for which a lens module needs to compensate, and allows the lens to cancel the jitter of the terminal device 900 through reverse motion, to implement image stabilization. The gyroscope sensor 980B may also be used in a navigation scenario and a somatic game scenario.

In this embodiment of this application, the gyroscope sensor 980B may detect a movement direction, which can be used as an indicator indicating that a car crash happens. For example, when the gyroscope sensor 980B in the terminal device detects that a movement method of the terminal device suddenly changes, a car crash may happen to the terminal device.

The barometric pressure sensor 980C is configured to measure barometric pressure. In some embodiments, the terminal device 900 calculates an altitude by using a barometric pressure value measured by the barometric pressure sensor 980C, to assist in positioning and navigation.

In this embodiment of this application, the barometric pressure sensor 980C may also measure barometric pressure, which can be used as an indicator indicating that a car crash happens. For example, when the barometric pressure sensor 980C detects that the barometric pressure of the environment suddenly increases, it may be because an airbag of the vehicle at a location of the terminal device pops out. In this case, a car crash may happen to the terminal device.

The magnetic sensor 980D includes a Hall sensor. The terminal device 900 may detect opening and closing of a flip cover through the magnetic sensor 980D. In some embodiments, when the terminal device 900 is a flip phone, the terminal device 900 may detect opening and closing of the flip cover through the magnetic sensor 980D. Further, a feature such as automatic unlocking of the flip cover is set based on a detected opening or closing state of a leather case or a detected opening or closing state of the flip cover.

The acceleration sensor 980E may detect accelerations of the terminal device 900 in various directions (usually on three axes). When the terminal device 900 is stationary, the acceleration sensor 980E may detect a gravity size and a gravity direction. The acceleration sensor 980E may be further configured to recognize a posture of the terminal device, and is used in landscape/portrait mode switching or an application, for example, a pedometer.

For example, the acceleration sensor 980E may detect acceleration, which can be used as an indicator indicating that a car crash happens. For example, when the acceleration sensor 980E in the terminal device detects that a large acceleration suddenly occurs, the vehicle may be performing extreme acceleration or deceleration. In this case, a car crash may happen to the terminal device.

The distance sensor 980F is configured to measure a distance. The terminal device 900 may measure a distance by using infrared light or a laser. In some embodiments, in an image shooting scenario, the terminal device 900 may measure a distance via the distance sensor 980F, to implement quick focusing.

For example, in this application, a distance between any part of the user and a screen center of the terminal device may be measured by using the distance sensor 980F, or a distance between any part of the user and any point on a screen of the terminal device may be measured by using the distance sensor 980F.

The optical proximity sensor 980G may include, for example, a light-emitting diode (LED) and an optical detector, for example, a photodiode. The light-emitting diode may be an infrared light-emitting diode. The terminal device 900 emits infrared light through the light-emitting diode. The terminal device 900 detects infrared reflected light from a nearby object through the photodiode. When detecting sufficient reflected light, the terminal device 900 may determine that an object exists near the terminal device 900. When detecting insufficient reflected light, the terminal device 900 may determine that no object exists near the terminal device 900. The terminal device 900 may detect, by using the optical proximity sensor 980G, that a user holds the terminal device 900 close to an ear for a call, so that the terminal device automatically turns off the screen to save power. The optical proximity sensor 980G may also be used in a smart cover mode or a pocket mode to automatically perform screen unlocking or locking.

The ambient light sensor 980L is configured to sense ambient light brightness. The terminal device 900 may adaptively adjust brightness of the display 994 based on the sensed ambient light brightness. The ambient light sensor 980L may also be configured to automatically adjust white balance during photographing. The ambient light sensor 980L may further cooperate with the optical proximity sensor 980G to detect whether the terminal device 900 is in a pocket, to avoid mistouch.

The fingerprint sensor 980H is configured to collect a fingerprint. The terminal device 900 may implement fingerprint-based unlocking, unlocking for application access, fingerprint-based photographing, fingerprint-based call answering, and the like by using a feature of the collected fingerprint.

The temperature sensor 980J is configured to detect a temperature. In some embodiments, the terminal device 900 executes a temperature processing policy based on the temperature detected by the temperature sensor 980J. For example, when the temperature reported by the temperature sensor 980J exceeds a threshold, the terminal device 900 lowers performance of a processor located near the temperature sensor 980J, to reduce power consumption to implement thermal protection. In some other embodiments, when the temperature is less than another threshold, the terminal device 900 heats the battery 942 to avoid abnormal shutdown of the terminal device 900 due to a low temperature. In some other embodiments, when the temperature is less than still another threshold, the terminal device 900 boosts an output voltage of the battery 942, to avoid abnormal shutdown due to a low temperature.

The touch sensor 980K is also referred to as a "touch panel". The touch sensor 980K may be disposed on the display 994, and the touch sensor 980K and the display 994 constitute a touchscreen, which is also referred to as a "touchscreen". The touch sensor 980K is configured to detect a touch operation performed on or near the touch sensor. The touch sensor may transfer the detected touch operation to the application processor to determine a type of the touch event. A visual output related to the touch operation may be provided through the display 994. In some other embodiments, the touch sensor 980K may alternatively be disposed on a surface of the terminal device 900 at a position different from that of the display 994.

The bone conduction sensor 980M may obtain a vibration signal. In some embodiments, the bone conduction sensor 980M may obtain a vibration signal of a vibration bone of a human vocal-cord part. The bone conduction sensor 980M may also be in contact with a body pulse to receive a blood pressure beating signal. In some embodiments, the bone conduction sensor 980M may also be disposed in the headset, to obtain a bone conduction headset. The audio module 970 may obtain a speech signal through parsing based on the vibration signal that is of the vibration bone of the vocal-cord part and that is obtained by the bone conduction sensor 980M, to implement a speech function. The application processor may parse heart rate information based on the blood pressure beating signal obtained by the bone conduction sensor 980M, to implement a heart rate detection function.

The button 990 includes a power button, a volume button, and the like. The button 990 may be a mechanical button, or may be a touch button. The terminal device 900 may receive an input on the button, and generate a button signal input related to a user setting and function control of the terminal device 900.

The motor 991 may generate a vibration prompt. The motor 991 may be configured to provide an incoming call vibration prompt and a touch vibration feedback. For example, touch operations performed on different applications (for example, photographing and audio playback) may correspond to different vibration feedback effects. The motor 991 may also correspond to different vibration feedback effects for touch operations performed on different areas of the display 994. Different application scenarios (for example, a time reminder, information receiving, an alarm clock, and a game) may also correspond to different vibration feedback effects. A touch vibration feedback effect may be further customized.

The indicator 992 may be an indicator light, and may be configured to indicate a charging status and a power change, or may be configured to indicate a message, a missed call, a notification, and the like.

The SIM card interface 995 is configured to connect to a SIM card. The SIM card may be inserted into the SIM card interface 995 or removed from the SIM card interface 995, to implement contact with or separation from the terminal device 900. The terminal device 900 may support one or N SIM card interfaces, and N is a positive integer greater than 1. The SIM card interface 995 may support a nano-SIM card, a micro-SIM card, a SIM card, and the like. A plurality of cards may be inserted into a same SIM card interface 995 at the same time. The plurality of cards may be of a same type or different types. The SIM card interface 995 is compatible with different types of SIM cards. The SIM card interface 995 is also compatible with an external memory card. The terminal device 900 interacts with a network by using the SIM card, to implement functions such as call and data communication. In some embodiments, the terminal device 900 uses an eSIM, namely, an embedded SIM card. The eSIM card may be embedded in the terminal device 900, and cannot be separated from the terminal device 900.

An embodiment of this application provides a vehicle-mounted device. The vehicle-mounted device is configured to perform steps performed by the vehicle-mounted device in the car crash detection method provided in this application.

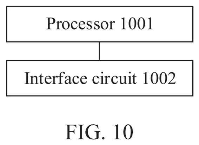

An embodiment of this application further provides a chip system. As shown in FIG. 10, the chip system includes at least one processor 1001 and at least one interface circuit 1002. The processor 1001 and the interface circuit 1002 may be connected through a line. For example, the interface circuit 1002 may be configured to receive a signal from another apparatus (for example, a memory of any one of the foregoing terminal devices). For another example, the interface circuit 1002 may be configured to send a signal to another apparatus (for example, the processor 1001). For example, the interface circuit 1002 may read instructions stored in the memory, and send the instructions to the processor 1001. When the instructions are executed by the processor 1001, the terminal device can perform the steps performed by any terminal device (for example, the terminal device may be a handheld device (for example, a mobile phone), various portable laptops, various tablet computers, a smart camera, or a wearable device) in the foregoing embodiments. Alternatively, when the instructions are executed by the processor 1001, the terminal device can perform the steps performed by any vehicle-mounted device in the foregoing embodiments. Certainly, the chip system may further include another discrete device. This is not specifically limited in embodiments of this application.

An embodiment of this application further provides an apparatus. The apparatus is included in a terminal device, and has a function of implementing a behavior of the terminal device in any one of the foregoing embodiments. The function may be implemented by hardware, or may be implemented by hardware executing corresponding software. The hardware or the software includes at least one module or unit corresponding to the foregoing function.

An embodiment of this application further provides an apparatus. The apparatus is included in a vehicle-mounted device, and has a function of implementing a behavior of the vehicle-mounted device in any one of the foregoing embodiments. The function may be implemented by hardware, or may be implemented by hardware executing corresponding software. The hardware or the software includes at least one module or unit corresponding to the foregoing function.

It should be further understood that division into the units in the apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

An embodiment of this application further provides a computer-readable storage medium, configured to store computer program code. The computer program includes the steps of executing or displaying an interface by the terminal device in any one of the foregoing embodiments provided in embodiments of this application. The readable medium may be a read-only memory (read-only memory, ROM) or a random access memory (random access memory, RAM). This is not limited in this embodiment of this application.

An embodiment of this application further provides a computer-readable storage medium, configured to store computer program code. The computer program includes the steps of executing or displaying an interface by the vehicle-mounted device in any one of the foregoing embodiments provided in embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, a terminal device is enabled to perform the steps of executing or displaying an interface by the terminal device in any one of the foregoing embodiments.

This application further provides a computer program product. The computer program product includes instructions. When the instructions are executed, a terminal device is enabled to perform the steps of executing or displaying an interface by the vehicle-mounted device in any one of the foregoing embodiments.

An embodiment of this application further provides a graphical user interface on a terminal device. The terminal device includes a display, a camera, a memory, and one or more processors. The one or more processors are configured to execute one or more computer programs stored in the memory; and the graphical user interface includes a graphical user interface displayed when the terminal device performs the steps performed by the terminal device in any one of the foregoing embodiments.

An embodiment of this application further provides a graphical user interface on a vehicle-mounted device. The vehicle-mounted device includes a display, a camera, a memory, and one or more processors. The one or more processors are configured to execute one or more computer programs stored in the memory. The graphical user interface includes a graphical user interface displayed when the vehicle-mounted device performs the steps performed by the vehicle-mounted device in any one of the foregoing embodiments.

The terminal device, the vehicle-mounted device, the apparatus, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

It may be understood that, to implement the foregoing functions, the terminal device or the like includes corresponding hardware structures and/or software modules for executing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, functional modules of the terminal device and the like may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, module division is an example and is merely logical function division. During actual implementation, there may be another division manner.

The foregoing descriptions about implementations allow a person skilled in the art to understand that, for the purpose of convenient and brief description, division of the foregoing functional modules is taken as an example for illustration. During actual application, the foregoing functions can be allocated to different functional modules and implemented based on a requirement, that is, an inner structure of an apparatus is divided into different functional modules to implement all or a part of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to conventional technologies, or all or a part of the technical solutions may be implemented in a form of a software product. The computer software product is stored in a storage medium, and includes several instructions for instructing a computer device (which may be a personal computer, a server, a network device, or the like) or a processor to perform all or a part of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A car crash detection method, applied to a terminal device, wherein the method comprises:
detecting first traveling data of a vehicle;
receiving first abnormality prompt information sent by a vehicle-mounted device; and
determining, based on the first traveling data and the first abnormality prompt information, whether to make a call for emergency rescue, wherein the vehicle-mounted device and the terminal device are in the vehicle, and there is a communication connection between the vehicle-mounted device and the terminal device.

2. The method according to claim 1, wherein the first abnormality prompt information comprises indication information, the indication information indicates that the vehicle has a traveling abnormality, and determining, based on the first traveling data and the first abnormality prompt information, whether to make a call for emergency rescue comprises:
determining, based on the indication information and the first traveling data, whether the vehicle actually has a traveling abnormality; and
determining, based on whether the vehicle actually has a traveling abnormality, whether to make a call for emergency rescue.

3. The method according to claim 2, wherein determining, based on whether the vehicle actually has a traveling abnormality, whether to make a call for emergency rescue comprises:
when the vehicle actually has a traveling abnormality, determining to make a call for emergency rescue, wherein the call for emergency rescue comprises: displaying call for rescue prompt information and sending, to the vehicle-mounted device, prompt information of needing to make a call for rescue.

4. The method according to claim 2, wherein determining that the vehicle actually has a traveling abnormality comprises: determining that the vehicle has a traveling abnormality, and that a severity of the traveling abnormality is greater than or equal to a preset abnormality threshold.

5. The method according to claim 1, wherein determining, based on the first traveling data and the first abnormality prompt information, whether to make a call for emergency rescue comprises:
determining, based on the first traveling data, that the vehicle has a traveling abnormality;
sending indication information to the vehicle-mounted device, wherein the indication information indicates that the vehicle has a traveling abnormality; and
determining, based on a response status of the vehicle-mounted device to the indication information, whether to make a call for emergency rescue, wherein the first abnormality prompt information comprises the response status of the vehicle-mounted device to the indication information.

6. The method according to claim 5, wherein determining, based on the response status of the vehicle-mounted device to the indication information, whether to make a call for emergency rescue comprises:
if prompt information that is sent by the vehicle-mounted device in response to the indication information and that confirms that an abnormality happens is received, or if no response information of the vehicle-mounted device to the indication information is received within a preset time length, determining to make a call for emergency rescue; or
if prompt information that is sent by the vehicle-mounted device in response to the indication information and that confirms that no abnormality happens is received, determining not to make a call for emergency rescue.

7. The method according to any one of claims 1 to 6, wherein before determining whether to make a call for emergency rescue, the method further comprises: determining, through message broadcasting communication, that the terminal device and the vehicle-mounted device are in the vehicle.

8. The method according to claim 7, wherein determining, through message broadcasting communication, that the terminal device and the vehicle-mounted device are in the vehicle comprises:
receiving first prompt information and a first identifier that are broadcast by the vehicle-mounted device, wherein the first prompt information prompts that the vehicle enters a traveling state, the first prompt information comprises second traveling data of the vehicle that is obtained by the vehicle-mounted device, and the first identifier is an identifier of the vehicle-mounted device;
in response to the first prompt information, determining, based on third traveling data of the vehicle that is detected by the terminal device, whether the terminal device is in a riding state;
if it is determined that the terminal device is in the riding state, determining, based on the second traveling data of the vehicle and the third traveling data of the vehicle, whether the terminal device is in the vehicle; and
if it is determined that the terminal device is in the vehicle, broadcasting a co-riding identifier and a second identifier, wherein the co-riding identifier represents that the vehicle-mounted device corresponding to the first identifier and the terminal device corresponding to the second identifier are in the same vehicle, and the second identifier is an identifier of the terminal device.

9. The method according to claim 7, wherein determining, through message broadcasting communication, that the terminal device and the vehicle-mounted device are in the vehicle comprises:
receiving first prompt information and a first identifier that are broadcast by the vehicle-mounted device, wherein the first prompt information prompts that the vehicle enters a traveling state, and the first identifier is an identifier of the vehicle-mounted device;
in response to the first prompt information, determining, based on third traveling data of the vehicle that is detected by the terminal device, whether the terminal device is in a riding state;
if it is determined that the terminal device is in the riding state, broadcasting the third traveling data and a second identifier of the vehicle, wherein the second identifier is an identifier of the terminal device; and
if a co-riding identifier broadcast by the vehicle-mounted device is received, determining that the terminal device is in the vehicle, wherein the co-riding identifier represents that the vehicle-mounted device corresponding to the first identifier and the terminal device corresponding to the second identifier are in the same vehicle.

10. A car crash detection method, applied to a vehicle-mounted device, wherein the method comprises:
detecting whether a traveling abnormality happens to a vehicle in which the vehicle-mounted device is located, to obtain a detection result;
receiving second abnormality prompt information sent by a terminal device; and
determining, based on the detection result and the second abnormality prompt information, whether to make a call for emergency rescue, wherein the vehicle-mounted device and the terminal device are in the vehicle, and there is a communication connection between the vehicle-mounted device and the terminal device.

11. The method according to claim 10, wherein determining, based on the detection result and the second abnormality prompt information, whether to make a call for emergency rescue comprises:
if the detection result is that a traveling abnormality happens to the vehicle, sending indication information to the terminal device based on the traveling abnormality that happens to the vehicle, wherein the indication information indicates that the vehicle actually has a traveling abnormality; and
determining, based on a response status of the terminal device to the indication information, whether to make a call for emergency rescue, wherein the second abnormality prompt information comprises the response status of the terminal device to the indication information.

12. The method according to claim 10, wherein the second abnormality prompt information comprises indication information, the indication information indicates that the vehicle has a traveling abnormality, and detecting whether a traveling abnormality happens to the vehicle in which the vehicle-mounted device is located, to obtain the detection result comprises:
detecting, in response to the indication information, whether a traveling abnormality happens to the vehicle in which the vehicle-mounted device is located, to obtain the detection result; and
determining, based on the detection result and the second abnormality prompt information, whether to make a call for emergency rescue comprises:
determining, based on the detection result, whether the vehicle actually has a traveling abnormality; and
determining, based on whether the vehicle actually has a traveling abnormality, whether to make a call for emergency rescue, and determining response information sent to the terminal device for the indication information, wherein the response information comprises: prompt information confirming that an abnormality happens or prompt information confirming that no abnormality happens.

13. The method according to any one of claims 10 to 12, wherein making a call for emergency rescue comprises: calling for road rescue and/or calling police.

14. The method according to any one of claims 10 to 13, wherein before determining whether to make a call for emergency rescue, the method further comprises: determining, through message broadcasting communication, that the terminal device and the vehicle-mounted device are in the vehicle.

15. A car crash detection apparatus, wherein the apparatus comprises a unit configured to perform steps of the method according to any one of claims 1 to 9, or the apparatus comprises a unit configured to perform steps of the method according to any one of claims 10 to 14.

16. A terminal device, wherein the terminal device comprises a processor and a memory, the memory is configured to store instructions, and the processor is configured to read the instructions to perform the method according to any one of claims 1 to 9.

17. A vehicle-mounted device, wherein the vehicle-mounted device comprises a processor and a memory, the memory is configured to store instructions, and the processor is configured to read the instructions to perform the method according to any one of claims 10 to 14.

18. A car crash detection system, comprising the terminal device according to claim 16 and the vehicle-mounted device according to claim 17.

19. A computer-readable storage medium, wherein the computer-readable storage medium stores a computer program, the computer program comprises program instructions, and when the program instructions are executed by a processor, the processor is enabled to perform the method according to any one of claims 1 to 9, or when the program instructions are executed by a processor, the processor is enabled to perform the method according to any one of claims 10 to 14.

20. A chip, comprising: a processor, configured to invoke a computer program from a memory and run the computer program, to enable a communication device in which the chip is installed to perform the method according to any one of claims 1 to 9, or to enable a communication device in which the chip is installed to perform the method according to any one of claims 10 to 14.
